# EUROPEAN PATENT SPECIFICATION

(11) **EP 0 696 153 B1**
(45) Date of publication and mention of the grant of the patent: **16.11.2005**
(21) Application number: 95909952.4
(22) Date of filing: 22.02.1995
(51) Int. Cl.: H04Q 7/38

(54) **COMMUNICATION METHOD COMMONLY USING MOBILE COMMUNICATION TERMINAL AND COMMUNICATION SYSTEM CONTROLLER USED THEREFOR**
KOMMUNIKATIONSVERFAHREN MIT ALLGEMEINER BENUTZUNG EINES MOBILKOMMUNIKATIONSENDGERÄTES UND KOMMUNIKATIONSSYSTEMSTEUEREINRICHTUNG DAFÜR
PROCEDE DE COMMUNICATION UTILISANT COMMUNEMENT UN POSTE D'ABONNE MOBILE ET SYSTEME DE CONTROLEUR DE COMMUNICATIONS UTILISE A CET EFFET

(30) Priority: 24.02.1994 JP 2655594; 23.08.1994 JP 19880594
(43) Date of publication of application: 07.02.1996
(73) Proprietor: NTT MOBILE COMMUNICATIONS NETWORK INC., Minato-ku, Tokyo 105-8436 (JP)
(72) Inventor: ISHIDA, So NTT Oumebashi Dokushin Ryou A-402, Higashiyamato-shi Tokyo 207 (JP); HIRATA, Shouichi, Higashiyamato-shi Tokyo 207 (JP); KIMURA, Kenichi, Nakano-ku Tokyo 164 (JP); NAKAJIMA, Akihisa, Tokyo 189 (JP); KURAMOTO, Minoru, Kanagawa 239 (JP); NAGATA, Kiyohito, Kanagawa 235 (JP); KAKINUMA, Kazuhiko, Yokohama-shi Kanagawa 236 (JP); YOSHIMI, Masaaki, Kanagawa 251 (JP); WAKABAYASHI, Tatsuaki, Yokosuka-shi Kanagawa 239 (JP)
(74) Representative: Hoffmann, Eckart
(86) International application number: PCT/JP1995/000250
(87) International publication number: WO 1995/023491

(56) References cited:
- JP-A- 59 027 636
- US-A- 4 980 907
- US-A- 5 251 248

## Description

### TECHNICAL FIELD

The present invention relates method of sharing a mobile communication terminal between a mobile communication network and a communication system connected to said mobile communication network directly or via another communication network; the method comprising. The invention also relates to a control device employed in a communication system connected to a mobile communication network directly or via another communication network for controlling connection between a mobile communication terminal (10) and said mobile communication network.

### BACKGROUND ART

With an indoor radio communication system, its mobile communication terminals can be interconnected for communications via a private branch exchange (PBX) in a building or underground shopping center, for example; moreover, they can be connected via the PBX to subscriber lines of a public communication network to which the indoor communication system is connected, and hence they are allowed to communicate with terminals of the public communication network. In many cases, service areas of the public communication network and the mobile communication network are set up geographically overlapping; when a mobile communication terminal of the mobile communication system happens to stay in the overlapping area, the connection of an incoming call to the mobile communication terminal via the indoor communication system would allow the sending power of the terminal to be small, reducing power consumption accordingly.

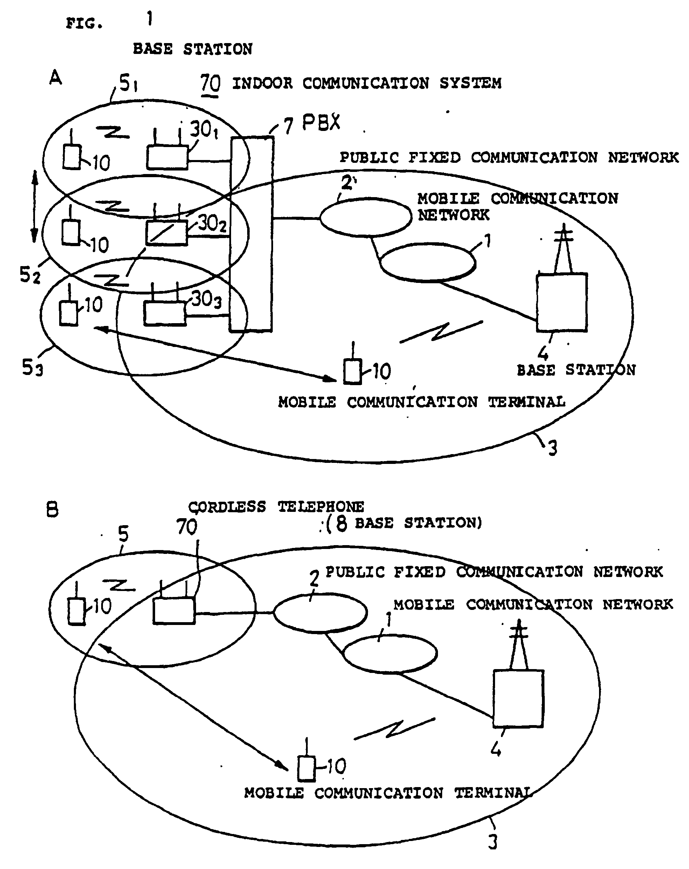

For example, as shown in Fig. 1A, there are cases where a mobile communication network 1 and a public fixed communication network 2 are set up geographically overlapping (the networks being shown to be isolated for convenience' sake). An indoor communication system 70 is subscriber to the public fixed communication network 2. In the indoor communication system 70, its subscriber lines are connected via a private branch exchange (PBX) 7, in this example, to a plurality of indoor base stations 301 to 303; the indoor base stations 301 to 303 can be connected via electric waves (radio waves) to mobile communication terminals 10 in respective service areas 51 to 53; the mobile communication terminals 10 can communicate with those in other service areas via the indoor base stations and the PBX 7 and, moreover, they can be connected to the subscriber lines via the indoor base stations and the PBX 7 for communication with terminals of the public fixed communication network 2. The service areas 51 to 53 are, for example, respective floors in a building, individual buildings on a large premises, or split areas of an underground shopping center.

On the other hand, the service area of the mobile communication network 1 is split into a plurality of zones (or cells) and the mobile communication terminal 10 in one of the zones 3 is connected via a radio circuit or channel to a base station of that zone 3, through which it is allowed to communicate with other mobile communication terminals in the mobile communication network 1 or fixed terminals of the public fixed communication network 2 and the indoor communication system 70. The mobile communication network 1 and the public fixed communication network 2 are far larger in area than the zone 3, but in Fig. 1 the networks are shown to be smaller than the zone for convenience' sake; moreover, although the zone 3 is situated in the mobile communication network 1 as described previously, the latter is shown to be included in the former. The zone 3 and the service areas 51 to 53 of the indoor communication system 70 geographically overlap; when the mobile communication terminal 10 of the mobile communication network 1 happens to stay in such an overlapping area, it is common practice in the art to use the mobile communication terminal 10 also as a mobile communication terminal of the indoor communication system so that an incoming call to the mobile communication terminal 10 is related thereto in the overlapping area from the mobile communication network 1 via the public fixed communication network 2 and the indoor communication system 70. In this instance, one of destination address (subscribers' telephone numbers) of the indoor communication system 70 is fixedly preassigned as an incoming call forwarding destination address to the mobile communication terminal 10 so that when it is in the overlapping area, the incoming call is forwarded to the destination address.

Moreover, when the mobile communication terminal 10 of the mobile communication network 1 stays in the service area 5 of a base station 8 of a cordless telephone 70' as shown in Fig. 1B, an incoming call to the mobile communication terminal 10 can be connected thereto via the public fixed communication network 2 and the base station 8 by assigning a subscriber's number of the cordless telephone 70' to the mobile communication terminal 10 as the incoming call forwarding destination address. In this case, when the mobile communication terminal is carried in a place like a house in a valley where radio wave of the mobile communication network 1 cannot be received, the subscriber's number of a cordless telephone installed in that house is assigned as the incoming call forwarding destination address to the mobile communication terminal and an incoming call forwarding registration is made accordingly. By this, when no answer is received to alerting from the mobile communication network 1 having received an incoming call to the mobile communication terminal, the incoming call can be forwarded via the cordless telephone 70'.

In this specification, the indoor communication system and the cordless telephone which utilize radios subscribed to the public fixed communication network or public mobile communication network as mentioned above will hereinafter be referred to as a second communication system and mobile communication terminals of the indoor communication system and the handset of the cordless telephone will hereinafter be referred to as mobile communication terminals.

As described previously, when the mobile communication terminal of the mobile communication network is in the coverage of the second communication system and shared as the mobile communication terminal of the latter, it is conventional that a destination address is fixedly assigned in that mobile communication terminal. On the other hand, the number of subscriber's numbers of the second communication system is one in the case of the cordless telephone and is not so large in the case of the indoor communication system either, and the number of addresses that can be assigned as incoming call forwarding destination addresses to the mobile communication terminals is limited to the number of subscriber's numbers belonging to the second communication system. Accordingly, even if a mobile communication terminal assigned the incoming call forwarding destination address leaves the coverage of the second communication system and hence that incoming call forwarding destination address becomes unnecessary, the address cannot be used as the incoming call forwarding destination address for another mobile communication terminal having newly entered the coverage of the second communication system. That is, the prior art does not efficiently use the subscriber's numbers (destination addresses) of the second communication system as incoming call forwarding destination addresses of mobile communication terminals in the prior art.

Moreover, in the prior art, mobile communication terminals which are not registered in advance in the second communication system cannot be shared as its mobile communication terminals.

The document US-A-4,980,907 discloses a system in which a subscriber equipment that may be private automatic branch exchange (PABX) or a cordless telephone (RSQ), i.e., a second communication system, is connected to a public switched telecommunication network (PSTN) communication system. A portable radio terminal (PRT) of the subscriber equipment is enabled to make and receive calls at a telepoint connected to the PSTN. Each local local network exchange (LNX) of the PSTN includes a network subscriber store (NSS) that stores only information on subscribers connected to the LNX, particularly, information on types of subscribers, types of equipment, number of lines, bandwidth, etc., but does not store information on the roaming location of the PRT. Rather, the roaming location of the PRT is stored in a residential local store of the subscriber residential equipment to which the PRT belongs. That is, a PRT visiting, for example, a telepoint calls its subscriber presidential base radio station to inform it of the ID of a radio station chosen as a serving radio transceiver as well as the PRT's ID.

A method and a control device as defined in the pre-characterizing part of claim 1 and claim 9, respectively, is known from US-A-5,251,248. In this prior art, roaming information of a PRT is stored in a memory in the mobile communication network when the PRT requests registration by calling a particular number. To change such registration, a particular number has to be called again.

### DISCLOSURE OF THE INVENTION

An object of the present invention is to provide a method and a control device that enable the relationship between a destination address and a mobile communication terminal being freely changed and stored in the second communication system thereby enabling the mobile communication terminal to receive an incoming call through the use of the same number as that when it is in the mobile communication network.

This object is achieved with a method as claimed in claim 1 and a control device as claimed in claim 9, respectively. Preferred embodiments of the invention are subject-matter of the dependent claims. The destination address assigned to the mobile communication terminal in the second communication system is allowed to be use as a destination address of the mobile communication terminal only while it stays in the second communication system, and when the mobile communication terminal has left it, the destination address assigned to the terminal is released therefrom so that it can be reused for (assigned to) another mobile communication terminal.

In the case where the communication system to which the second communication system is directly connected constitutes a digital communication network of a numbering system composed of subscriber's numbers and sub-addresses like ISDN, the sub-addresses are assigned to mobile communication terminals in place of the destination addresses and they are revoked (cancelled) in the same manner as the destination addresses. This permits efficient use of the subscriber's numbers.

### BRIEF DESCRIPTION OF THE DRAWINGS

Fig. 1 illustrates in block form examples of systems to which the method of the present invention is applied, A showing the case of using an indoor communication system as the second communication system and B the case of using a cordless telephone as the second communication system.
Fig. 2 is a block diagram schematically illustrating an example of the application of a second communication system device of the present invention to an indoor communication system and showing parts of a mobile communication network which are related to the present invention.
Fig. 3A is a diagram showing an example of stored contents of a location register 50 in a mobile communication network, and Fig. 3B a diagram showing an example of stored contents of a storage part 22 of an indoor communication system control device 20.
Fig. 4 is a diagram showing a location registration sequence in a first embodiment of this invention method.
Fig. 5 is a diagram showing a location de-registration sequence in the first embodiment.
Fig. 6 is a diagram showing a call terminating sequence in the first embodiment.
Fig. 7 is a diagram showing a call originating sequence in the first embodiment.
Fig. 8 is a diagram showing a location registration sequence in a second embodiment of this invention method.
Fig. 9 is a diagram showing location re-registration sequence in the second embodiment.
Fig. 10 is a diagram showing an incoming call forwarding de-registration sequence in the second embodiment.
Fig. 11 is a diagram showing a call terminating sequence in the second embodiment.
Fig. 12 is a diagram showing a location registration sequence in a third embodiment of this invention method.
Fig. 13 is a diagram showing a mobile location checking sequence in the third embodiment.
Fig. 14 is a diagram showing an incoming call forwarding de-registration sequence in the third embodiment.
Fig. 15 is a block diagram illustrating a system, including an ISDN network, which embodies this invention method and another embodiment of the device according to the present invention.
Fig. 16A is a diagram showing an example of a numbering system including a sub-address other than a subscriber's number, Fig. 16B a diagram showing an example of stored contents of a storage part 22 in Fig. 15 and Fig. 16C a diagram showing an example of stored contents of a location register 50 in Fig. 15.
Fig. 17 is a diagram showing a location registration sequence in the system depicted in Fig. 15.

### BEST MODE FOR CARRYING OUT THE INVENTION

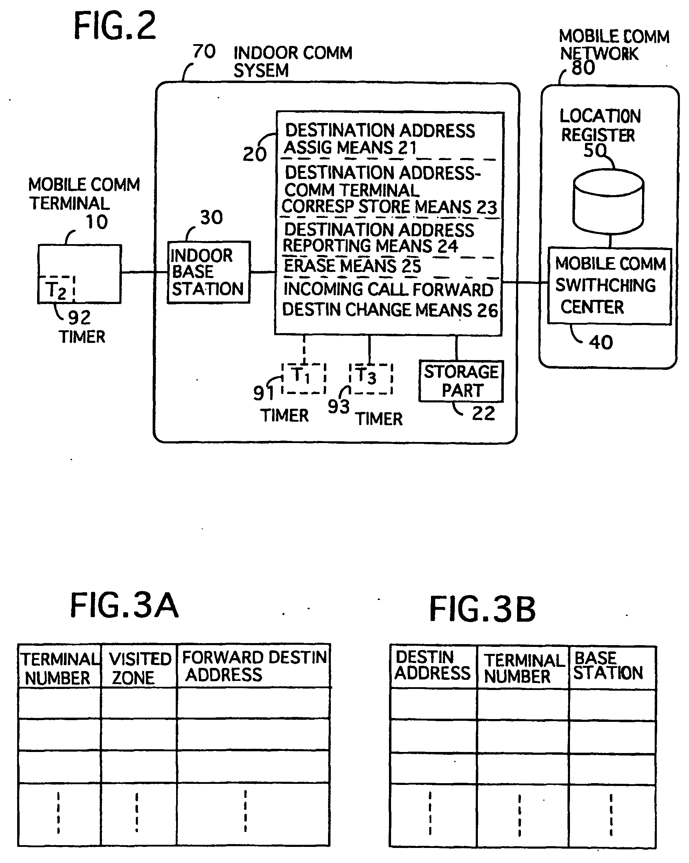

The present invention will hereinafter be described as being applied to the case of using an indoor communication system as the second communication system. In a location register 50 provided in a mobile communication switching center 40 of a mobile communication system 80 as shown in Fig. 2, there are stored for each mobile communication terminal, for example, the zone where it currently stays (location registration area information) and an incoming call forwarding destination address when it is registered. The mobile communication switching center 40 is connected to an indoor communication system 70 via the public fixed communication network in the afore-mentioned example, though not shown in Fig. 2. The indoor communication system 70 is provided with an indoor communication control device 20 which is connected to the mobile communication switching center 40 and an indoor base station 30 which is connected both to the indoor communication system control device 20 and the mobile communication terminal 10. A plurality of indoor base stations 30 may also be connected to the indoor communication system control device 20 as shown in Fig. 1A. Moreover, the indoor communication system control device 20 and the mobile communication switching center 40 may also be interconnected via the public network 2 as shown in Fig. 1A. The communication system control device 20 and the indoor base station 30 may sometimes be formed as a unitary structure.

In an embodiment of the second communication system device according to the present invention, the indoor communication system control device 20 has, in addition to means including the PBX in Fig. 1A which effects control necessary for communications between mobile communication terminals belonging to the indoor communication system 70 or between them and communication terminals of the public fixed communication network 2 or mobile communication network 1: destination address assignment means 21 which assigns a destination address, i.e. one of subscriber's numbers of the indoor communication system 70 in this example, to the mobile communication terminal 10 which has made a request for registration that it is staying in the service area of the indoor communication system 70; destination address-communication terminal correspondence storage means 23 which stores the correspondence between the destination address and the number of the mobile communication terminal assigned it, as shown in Fig. 3B; destination address reporting means 24 which requests a mobile communication system 80 to register the destination address assigned to the mobile communication terminal 10 as its visited zone in the location register 50; and erase means 25 which, upon receiving a location de-registration request from the mobile communication switching center 40, erases the number of the mobile communication terminal and the destination address assigned thereto, contained in the request, from a storage part 22 or rewrites the destination address to information which indicates that the mobile communication terminal 10 is not in the service area of the indoor communication system.

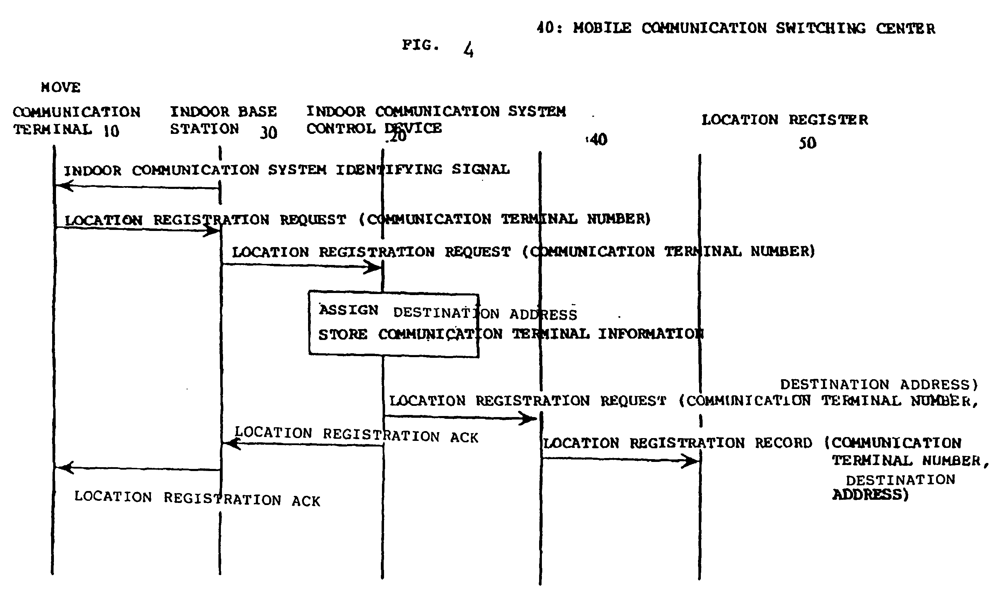

In Fig. 4 there is shown processing necessary for the mobile communication terminal 10 to stay under the command of the indoor communication system 70 in a first embodiment of this invention method. The indoor base station 30 always emit an indoor communication system identifying signal by radio. When the indoor communication system 70 if formed by a plurality of areas, the indoor communication system identifying signal may contain an area identifier of the indoor communication system. Upon receiving the indoor communication system identifying signal, the mobile communication terminal 10 sends to the indoor base station 30 a location registration request signal containing the number of the mobile communication terminal 10. The indoor base station 30 relays the location registration request signal to the indoor communication system control device 20. Upon receiving the location registration request signal, the indoor communication system control device 20 sends a location registration acknowledgement signal to the indoor base station if the number of the mobile communication terminal 10 has already been stored in the storage part 22, that is, if a destination address has already been assigned to the mobile communication terminal. When the number of the mobile communication terminal 10 is not yet stored in the storage part 20, the indoor communication system control device 20 assigns one of subscriber's numbers of the indoor communication system 70 (a destination address) to the mobile communication terminal 10, stores the relationship between the number of the mobile communication terminal 10 and the destination address in the storage part 22, sends to the mobile communication switching center 40 a location registration request signal containing the number of the mobile communication terminal 10 and the destination address assigned thereto, and sends a location registration acknowledgement signal to the indoor base station 30. Where the indoor communication system 70 and the mobile communication network 80 are interconnected via the public network 2 as shown in Fig. 1, a telephone number that identifies the indoor communication system 70 is used as the destination address. The indoor base station 30 relays the above-mentioned location registration acknowledgement signal to the mobile communication terminal 10. On the other hand, when receiving the above-mentioned location registration request signal, the mobile communication switching center 40 stores the above-said destination address as location registration area information (visited zone information) for the number of the mobile communication terminal 10 in the location register 50.

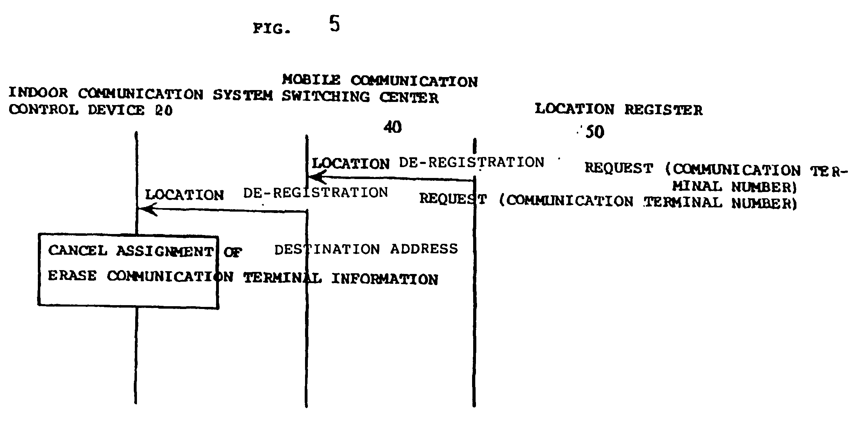

In Fig. 5 there is shown a sequence of processes that are performed when the mobile communication terminal 10 moves out of the coverage of the indoor communication system 70. When the mobile communication terminal 10 moves out of the service area of the indoor communication system 70 and into, for example, a zone in the mobile communication network 1 and requests the registration of its location and, as a result, the location registration area information of the mobile communication terminal 10 stored in the location register 50 changes from the afore-mentioned destination address to zone information, the location register 50 judges it from the destination address number and sends to the mobile communication switching center 40 a location registration erase request signal containing the number of the mobile communication terminal 10. The mobile communication switching center 40 relays the location registration erase request signal to the indoor communication control device 20. Upon receiving the location registration erase request signal, the indoor communication system control device 20 erases the information of the mobile communication terminal 10 stored in the storage part 22 so as to cancel the assignment of the destination address to the mobile communication terminal 10.

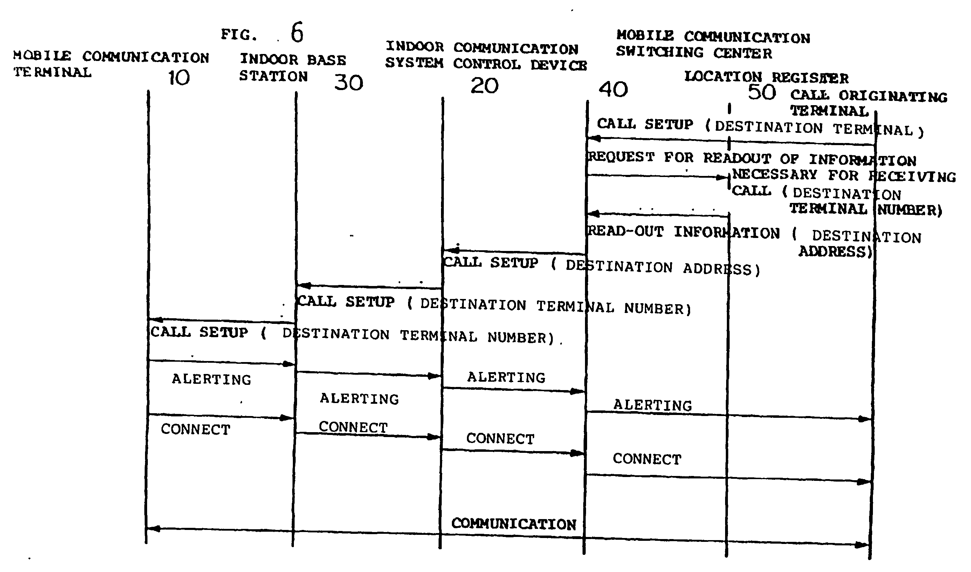

In Fig. 6 there is shown a sequence of steps for connecting a terminating call to the mobile communication terminal 10 in the service area of the indoor communication system 70. Having received directly from a call originating terminal or via the mobile communication network 1 a call setup signal containing the number of the mobile communication terminal 10, the mobile communication switching center 40 reads out of the location register 50 information necessary for receiving a call which contains the destination address of the mobile communication terminal 10, and sends a call setup signal containing the destination address to the indoor communication system control device 20. Upon receiving the call setup signal, the indoor communication system control device 20 reads out of the storage part 22 the number of the mobile communication terminal 10 corresponding to the destination address and, based on the information thus read out, sends a call setup signal to the indoor base station 30. The indoor base station 30 relays the call setup signal to the mobile communication terminal 10. The mobile communication terminal 10 responds to the call setup signal to send an alerting signal to the indoor communication system control device 20 and, if a user answers, sends a connect signal, and the indoor base station 30, the indoor communication system control device 20 and the mobile communication switching center 40 relay the alerting signal and the connect signal to the call originating terminal, enabling communication. When there are a plurality of the indoor base stations 30, the indoor base station indicating the service area of the indoor base station 30 of the indoor communication system 70 where the mobile communication terminal 10 currently stays is prestored in the storage part 22 in correspondence with the number of the mobile communication terminal as depicted in Fig. 3B. When an incoming call to the mobile communication terminal 10 occurs, alerting is carried out, for example, only a certain story (floor) of a building via the stored indoor base station 30; it is also possible, in this case, to perform simultaneous alerting via all the indoor base stations 30 in the indoor communication system 70 or for each group of indoor base stations 30.

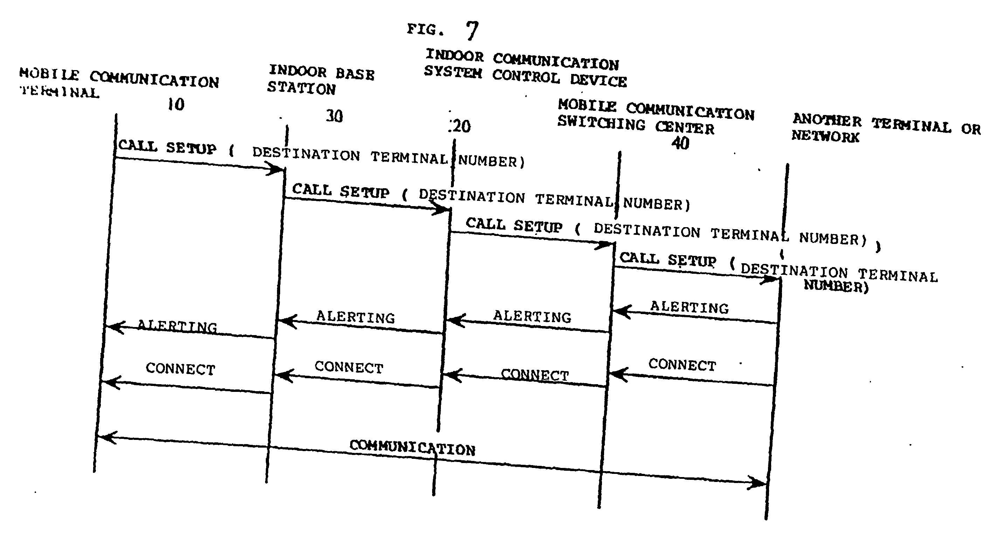

Fig. 7 shows a sequence of steps involved in originating a call from the mobile communication terminal 10 staying in the service area of the indoor communication system 70. The mobile communication terminal 10 sends to the indoor base station 30 a call setup signal including a destination terminal number. The indoor base station 30 and the indoor communication system control device 20 relay the call setup signal to the mobile communication switching center 40. The mobile communication switching center 40 connects the call setup signal to the party specified by the destination terminal number and relays an alerting signal and a connect signal from the specified party to the indoor communication system control device 20. The indoor communication system control device 20 and the indoor base station 30 relay the alerting signal and the connect signal to the mobile communication terminal 10, which starts communication upon receiving the answer signal.

While in the above information on the mobile communication terminal 10 staying out of the coverage of the indoor communication system 70 is not stored in the storage part 22, the indoor communication system 70 may also be adapted so that when receiving a location registration erase request signal, it stores in the storage part 22 information indicating that the mobile communication terminal 10 is not in its coverage.

Next, a second embodiment of this invention method will be described. The system configuration of the second embodiment is the same as that of the first embodiment, but the location register 50 stores an incoming call forwarding destination address of the mobile communication terminal 10 and the communication system control device 20 and the mobile communication terminal 10 have a timer 91 and a timer 92, respectively.

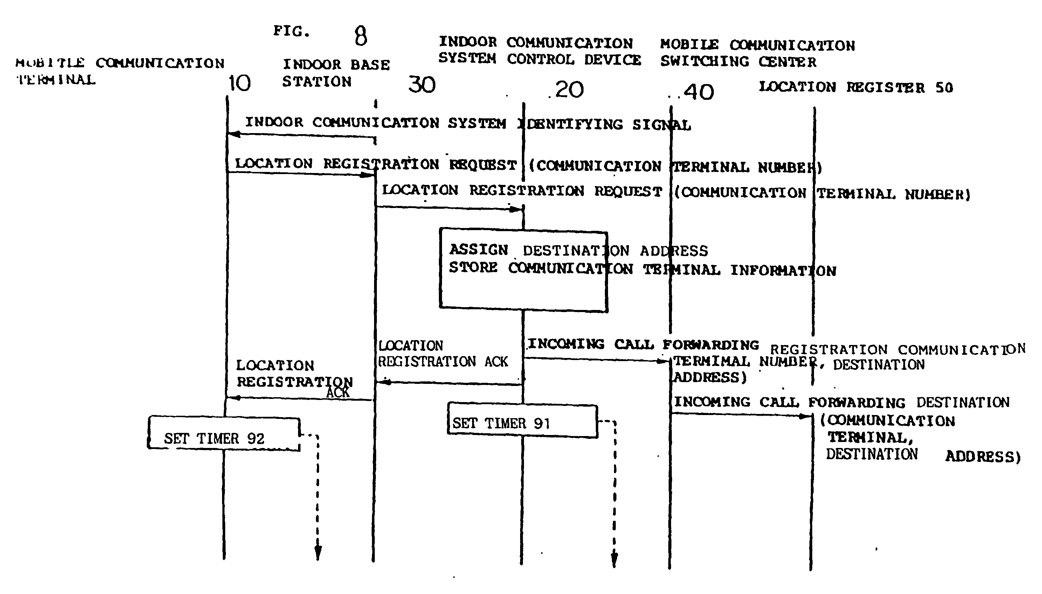

Fig. 8 shows a sequence of steps involved in the case where the mobile communication terminal 10 is in the coverage of the indoor communication system 70. The indoor base station 30 always emits an indoor communication system identifying signal by radio. Upon receiving the indoor communication system identifying signal, the mobile communication terminal 10 sends to the indoor base station 30 a location registration request signal including the number of the mobile communication terminal 10. The indoor base station 30 relays the location registration request signal to the indoor communication system control device 20. Having receiving the location registration request signal, the indoor communication system control device 20 checks information about the mobile communication terminal 10 and, if the information is not prestored in the storage part 22, assigns a destination address to the mobile communication terminal 10, after which the control device sends to the mobile communication switching center 40 an incoming call forwarding registration signal including the number of the mobile communication terminal 10 and the destination address assigned thereto, sends a location registration acknowledgement signal to the indoor base station 30, and sets the timer 91. The indoor base station 30 relays the location registration acknowledgement signal to the mobile communication terminal 10. Upon receipt of the location registration acknowledgement signal, the mobile communication terminal 10 sets the timer 92. In this instance, the time T₂ that is set in the timer 92 is selected shorter than the time T₁ to be set in the timer 91. Having received the incoming call forwarding registration signal from the indoor communication system control device 20, the mobile communication switching center 40 stores in the location register 50 the destination address as the incoming call forwarding destination address corresponding to the number of the mobile communication terminal 10.

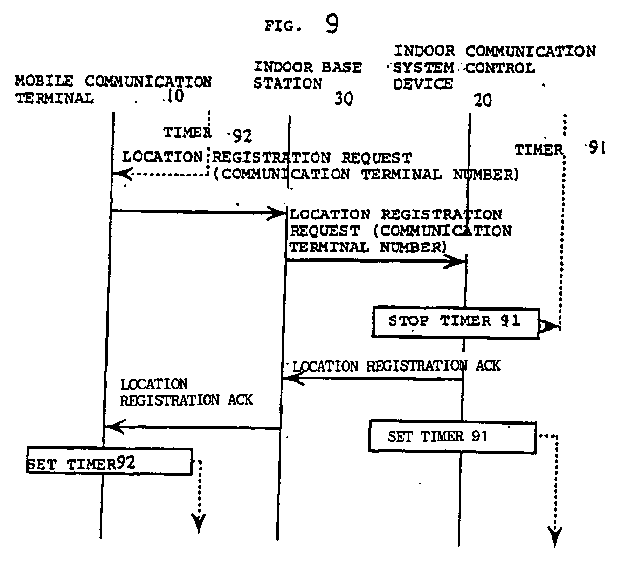

Fig. 9 shows a sequence of steps involved in the re-registration of the location of the mobile communication terminal 10 in the indoor communication system 70. When the time T₂ set in the timer 92 has passed, that is, when the timer 92 has timed out, the mobile communication terminal 10 sends again a location registration request signal to the indoor base station 30. The indoor base station 30 relays the location registration request signal to the indoor communication system control device 20. Upon receipt of the location registration request signal, the indoor communication system control device 20 checks information (the terminal number) of the mobile communication terminal 10 and, if it is prestored in the storage part 22, the indoor communication system control device 20 stops the timer 91, then sends a location registration acknowledgement signal to the indoor base station 30 and sets the timer 91 again. The indoor base station 30 relays the location registration acknowledgement signal to the mobile communication terminal 10. Thereafter, the mobile communication terminal 10 sends a location registration request signal at intervals of the time T₂ which is set by the timer 92.

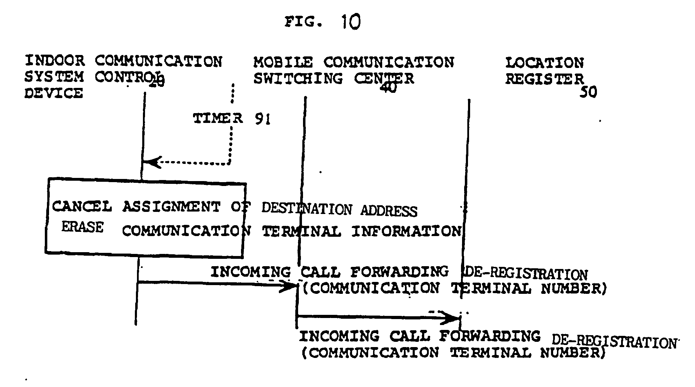

Fig. 10 shows a sequence of steps which are performed when the mobile communication terminal 10 has moved out of the coverage of the indoor communication system 70. When the mobile communication terminal 10 has moved out of the coverage of the indoor communication system 70, the location registration request signal does not reach the indoor communication system control device 20. When the time T₁ set by the timer 91 has passed without receiving the location registration request signal, that is, when the timer has timed out, the indoor communication system control device 20 cancels the assignment of the destination address to the mobile communication terminal 10, then erases the terminal number of the mobile communication terminal 10 and the destination address assigned thereto in the storage part 22, or writes information that the terminal number is not in the coverage of the indoor communication system, and sends to the mobile communication switching center 40 an incoming call forwarding de-registration signal including the number of the mobile communication terminal 10. Upon receiving the incoming call forwarding de-registration signal, the mobile communication switching center 40 erases the incoming call forwarding destination address of the mobile communication terminal 10 stored in the location register 50.

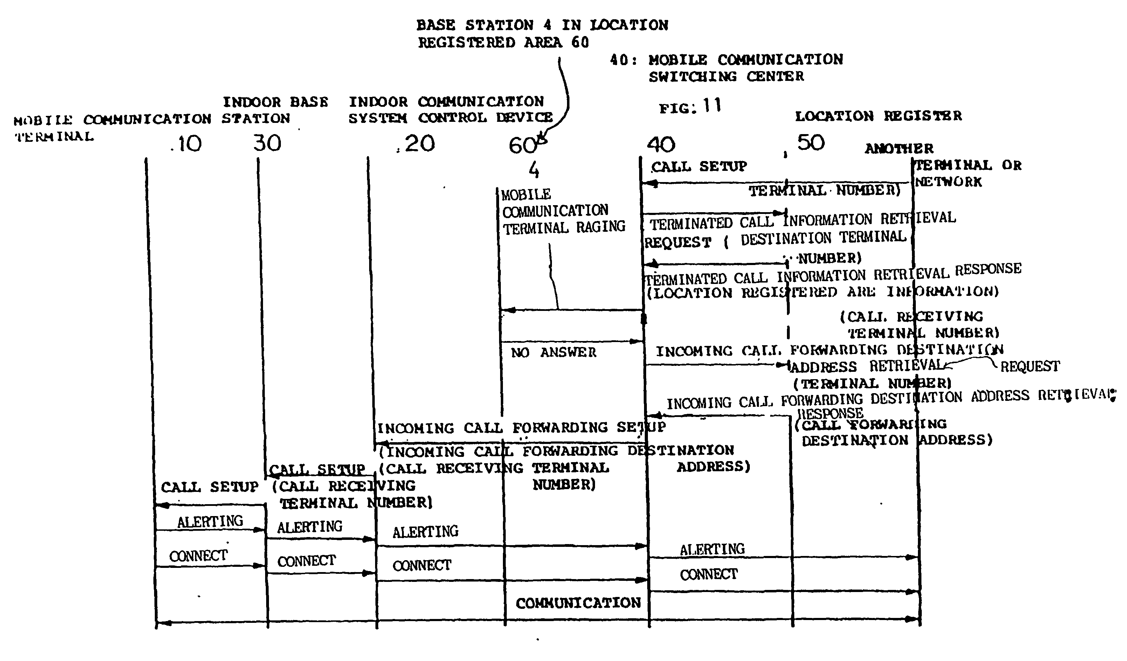

Fig. 11 shows a sequence of steps involved in connecting an incoming call to the mobile communication terminal 10 staying in the coverage of the indoor communication system 70. Upon receiving from another terminal or public fixed communication network 2 a call setup signal including the number of the mobile communication terminal 10, the mobile communication switching center 40 reads out the location registered area information (the visited zone) of the mobile communication terminal 10 from the location register 50, then calls the mobile communication terminal 10 via the base station 4 (Fig. 1) of the specified location registered area 60 and, if no answer is received, reads out the incoming call forwarding destination address of the mobile communication terminal 10 from the location register 50 and sends to the indoor communication system control device 20 a call setup signal including the incoming call forwarding destination address. Incidentally, it is also possible to employ, in this instance, a method which, at the time of reading out the location registered area information from the location register 50, makes a check to see if the incoming call forwarding destination address has been stored for the mobile communication terminal 10 and, if so, forwards the incoming call without calling the mobile communication terminal 10 in the location registered area 60. Upon receiving the call setup signal, the indoor communication system control device 20 reads out of the storage part 22 the number of the mobile communication terminal 10 corresponding to the above-mentioned incoming call forwarding destination address and, based on the information thus read out, sends a call setup signal to the indoor base station 30. The indoor base station 30 relays the call setup signal to the mobile communication terminal 10. Upon receiving the call setup signal, the mobile communication terminal 10 sends an alerting signal to the indoor communication system control device 20 and, if a user answers, sends a connect signal; the indoor base station 30, the indoor communication system control device 20 and the mobile communication switching center 40 relay the alerting signal and the connect signal to the call originating terminal, starting communication.

The call setup processing in this second embodiment is performed in the same manner as in the first embodiment.

Next, a third embodiment of this invention method will be described. The system configuration of the third embodiment is the same as that of the first embodiment, but the location register 50 stores the incoming call forwarding destination address of the mobile communication terminal 10 and the communication system control device 20 has two timers 91 and 93.

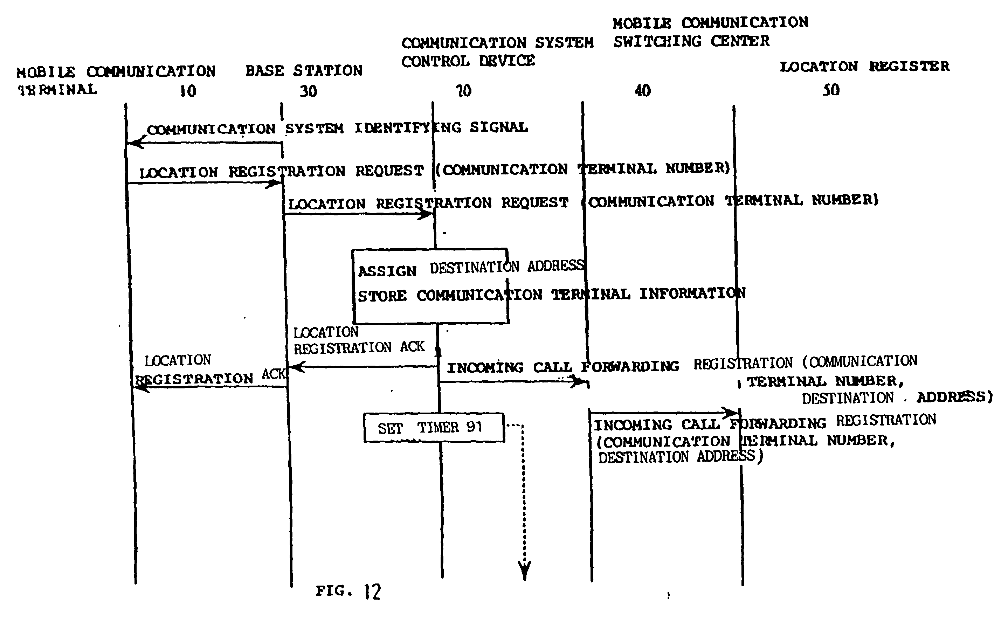

Fig. 12 shows a sequence of steps involving when the mobile communication terminal 10 is in the coverage of the indoor communication system 70. The indoor base station 30 always radiates a communication system identifying signal by radio. Upon receiving this communication system identifying signal, the mobile communication terminal 10 sends to the indoor base station 30 a location registration request signal including the number of the mobile communication terminal 10. The indoor base station 30 relays the location registration request signal to the indoor communication control device 20. Upon receipt of the location registration request signal, the indoor communication system control device 20 checks information about the mobile communication terminal 10 and, if the information is not found in the storage part 22, assigns a destination address to the mobile communication terminal 10; then, the control device stores the number of the mobile communication terminal 10 and the destination address assigned thereto, sends a location registration acknowledgement signal to the indoor base station 30 and, at the same time, sends to the mobile communication switching center 40 an incoming call forwarding registration signal including the number of the mobile communication terminal 10 and the destination address, and sets the timer 91. The indoor base station 30 relays the location registration acknowledgement signal to the mobile communication terminal 10. Upon receiving the incoming call forwarding registration signal, the mobile communication switching center 40 stores the destination address as the incoming call forwarding destination address corresponding to the number of the mobile communication terminal 10 in the location register 50. This processing is identical with that of Fig. 8, except that the setting of the timer 92 in the mobile communication terminal 10 is omitted in Fig. 12.

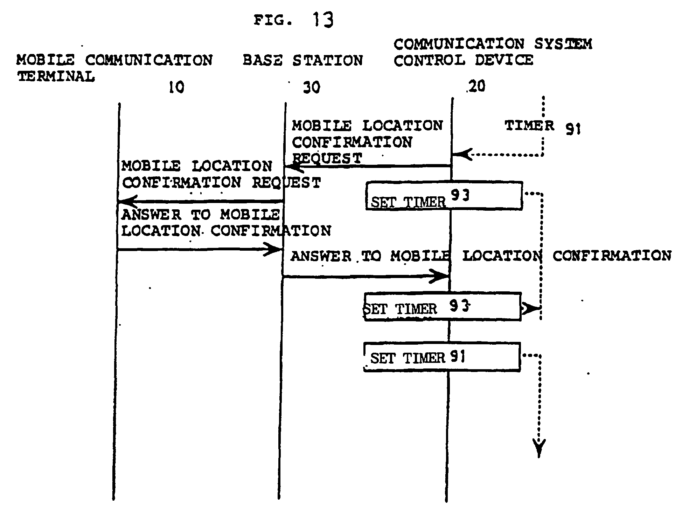

Fig. 13 shows a sequence of steps involved in the confirmation of the location of the mobile communication terminal 10 in the coverage of the indoor communication system 70. After the elapse of time T₁ set by the timer 91, the indoor communication system control device 20 sends a mobile location confirmation request signal to the indoor base station 30 and sets the timer 93. The mobile location confirmation request signal is a signal to make sure that the mobile communication terminal 10 is in the coverage of the indoor communication system, or a pseudo-alerting signal to the mobile communication terminal 10. The indoor base station 30 relays the mobile location confirmation request signal to the mobile communication terminal 10. Upon receipt of the mobile location confirmation request signal, the mobile communication terminal 10 sends a mobile location confirmation connect signal to the indoor base station 30. The indoor base station 30 relays the mobile location confirmation connect signal to the indoor communication system control device 20. Upon receipt of the mobile location confirmation connect signal, the indoor communication system control device 20 stops the timer 93 and resets the timer 91. Thereafter, the indoor communication system control device 20 confirms the mobile location at intervals of the time T₁ set by the timer 91. The mobile location confirmation connect signal is a signal indicating that the mobile communication terminal 10 is in the coverage of the indoor communication system, or an answer signal from the mobile communication terminal 10.

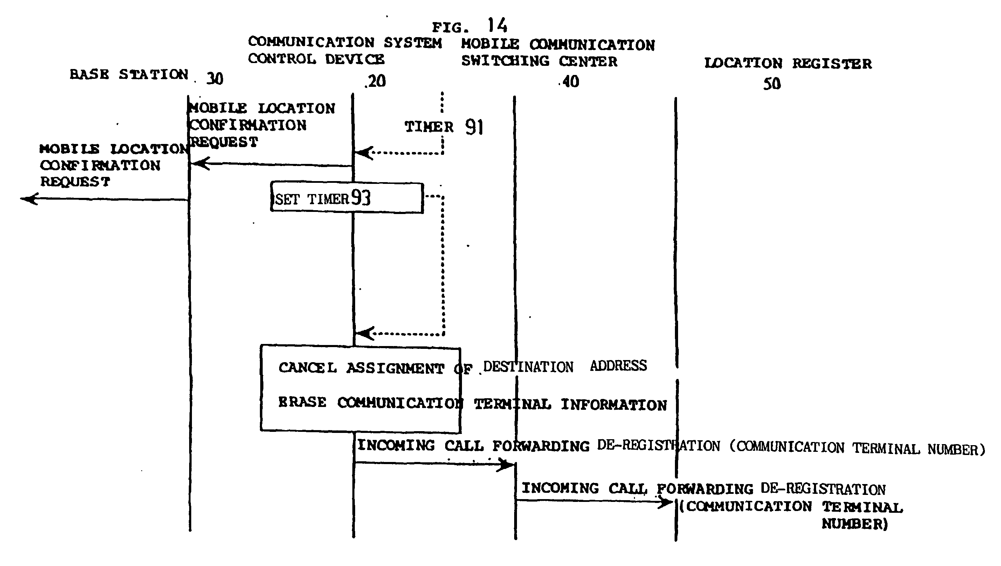

Fig. 14 shows a sequence of steps involved when the mobile communication terminal 10 has left the coverage of the indoor communication system 70. Upon each passage of the time T₁ set by the timer 91, that is, upon each time out of the timer 91, the indoor communication system control device 20 sends a mobile location confirmation request signal to the indoor base station 30 and resets the timer 93. The indoor base station 30 sends out the mobile location confirmation request signal so as to relay it to the mobile communication terminal 10. When the mobile communication terminal 10 has moved out of the coverage of the indoor communication system 70, the mobile location confirmation request signal does not reach the mobile communication terminal 10, which does not deliver the mobile location confirmation connect signal. After the elapse of time T₃ set by the timer 93 without receiving the mobile location confirmation connect signal, the indoor communication control device 20 cancels the assignment of the destination address to the mobile communication terminal 10, erases information about the mobile communication terminal 10 in the storage part 22, or rewrites the information to one that indicates that the mobile communication terminal is out of the coverage of the indoor communication system, and sends to the mobile communication switching center 40 an incoming call forwarding de-registration signal including the number of the mobile communication terminal 10. Upon receiving the incoming call forwarding de-registration signal, the mobile communication switching center 40 erases the incoming call forwarding destination address of the mobile communication terminal 10 stored in the location register 50. It is also possible to employ a system configuration in which when the timer 93 times out, the indoor communication control device does not send the incoming call forwarding de-registration signal but instead delivers the mobile location confirmation request signal once to several times and, if no mobile location confirmation answer is received thereto, sends out the incoming call forwarding de-registration signal.

The call terminating and the call originating processing in this third embodiment are the same as in the second embodiment.

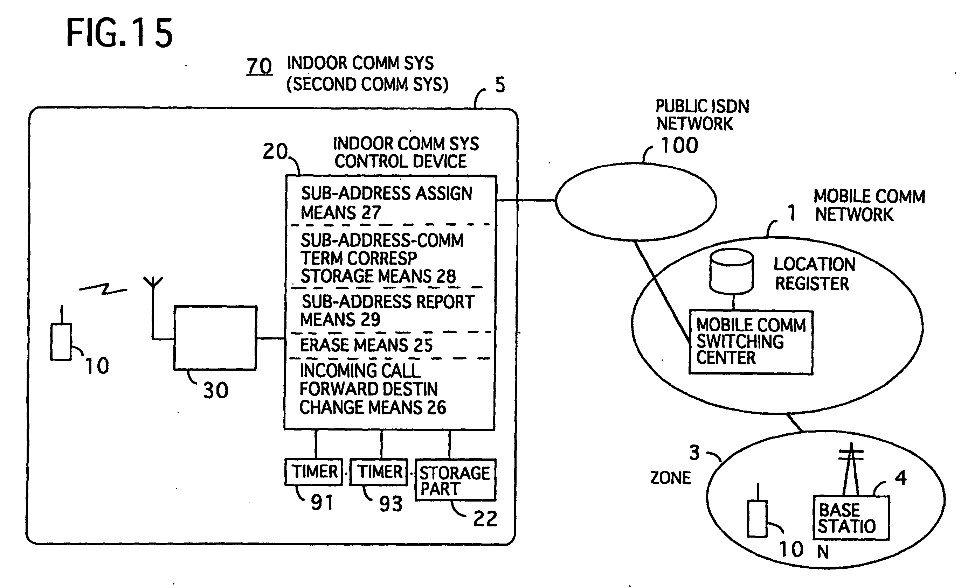

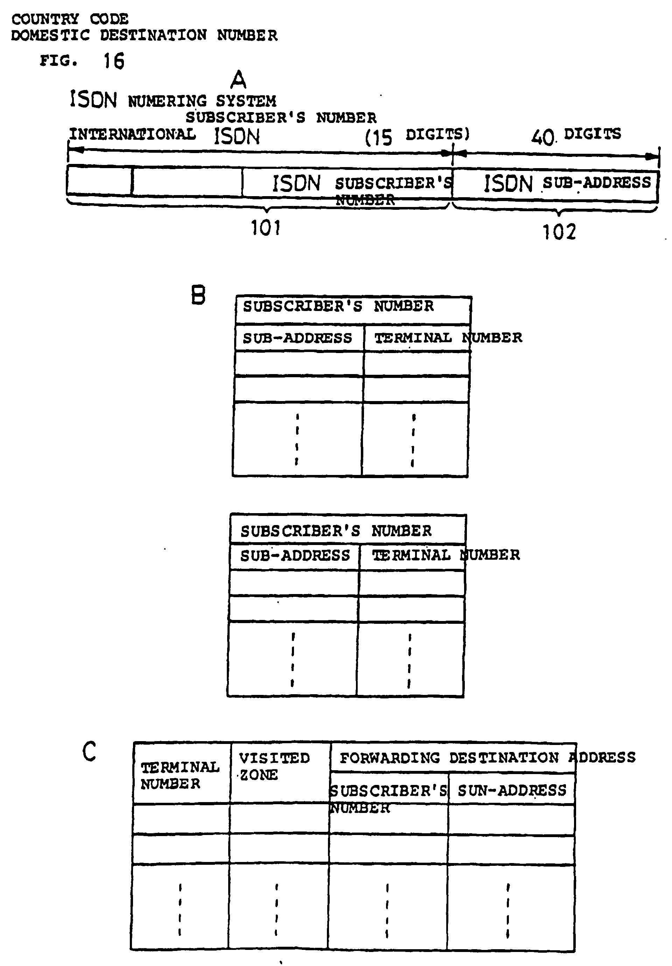

Where the communication network to which the second communication system is directly connected constitutes a digital communication network of a numbering system composed of a subscriber's number and a sub-address, the afore-mentioned destination address can be replaced with the sub-address. For example, as shown in Fig. 15 wherein the parts corresponding to those in Figs. 1 and 2 are identified by the same reference numerals, the second communication system (the indoor communication system in this example) 70 is connected directly to a public ISDN network (a digital integrated communication network) 100, that is, the indoor communication system 70 is a subscriber of the public ISDN network 100. The public ISDN network 100 is connected to the mobile communication network 1. In the public ISDN network 100, two communications can simultaneously be made per subscriber line, that is, per subscriber's number, and it is possible to connect a plurality of terminals to one subscriber's line and reach them via the subscriber's line by distinguishing them through the use of the sub-addresses. That is, as shown in Fig. 16A, the numbering system of the public ISDN network 100 is formed by 55 digits, 15 digits of which form an ISDN subscriber's number 101 and the remaining 40 digits form an ISDN sub-address 102. The subscriber's number 101 is used to reach the subscriber concerned and the sub-address 102 is used to reach any one of its terminals.

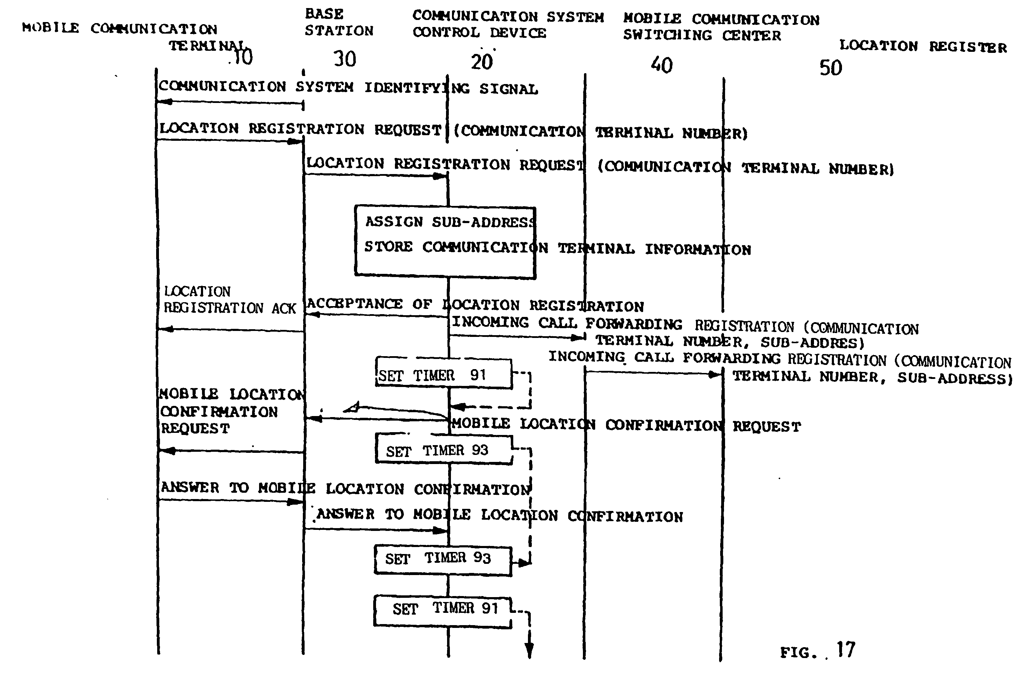

The mobile communication terminal 10 can be admitted into the coverage of the indoor communication system 70 by performing substantially the same processing as shown in Fig. 12, for example. This will be described in brief. As shown in Fig. 17, when the mobile communication terminal 10 delivers a location registration request after receiving an identifying signal from the base station 30, the communication system control device 20 having received the location registration request assigns the sub-address to the mobile communication terminal 10 by sub-address assigning means 27 (Fig. 15), stores the relationship between the sub-address and the mobile communication terminal number in the storage part 22 by sub-address-communication terminal correspondence storing means 28 in such a manner as shown in Fig. 16B, then informs the mobile communication terminal 10 of the acceptance of the location registration, and sends to the mobile communication switching center 40 the subscriber's number of the indoor communication system and an incoming call forwarding registration request added with the above-mentioned sub-address and the communication terminal number. Upon receiving this request, the mobile communication switching center 40 stores the subscriber's number and the sub-address as the incoming call forwarding destination address in the part corresponding to the number of the mobile communication terminal in the location register 50, for example, as shown in Fig. 16B. After sending the incoming call forwarding registration request to the mobile communication network 1, the communication system control device 20 sets the timer 91 and, when it times out, sends a mobile location confirmation request to the mobile communication terminal 10. The subsequent processing is carried out in the same manner as shown in Figs. 13 and 14, and if no answer is received to the mobile location confirmation request, the control device cancels the assignment of the sub-address to the mobile communication terminal 10 and sends an incoming call forwarding de-registration request to the mobile communication network 1. The cancellation of the assignment of the sub-address may be effected by erasing the relationship between the sub-address and the terminal number from the storage part 22 as described previously, or by storing that the terminal is not in the coverage of the indoor communication system.

A call from another terminal to the mobile communication terminal 10 in the coverage of the indoor communication system 70 is processed by the same sequence of steps as shown in Fig. 11. That is, the mobile communication switching center 40 is caused to read out the visited zone of the called terminal from the location register 50 on the basis of the number of the called terminal, a request is made to the zone for calling the mobile communication terminal, and if no answer is received, the switching center is caused to read out the incoming call forwarding destination address of the number of the called terminal from the location register 50, or when the call forwarding destination address is prestored, the switching center is caused read out without making the call request to the zone, and a call setup request is made to the ISDN network 100 to connect the incoming call to the call forwarding destination address, that is, the ISDN subscriber's number and its sub-address. The indoor communication system control device 20, put by this call receiving request in the condition of terminating connection with the subscriber's number, uses the sub-address to read out the mobile communication terminal number from the storage part 22 and calls the mobile communication terminal of the read-out terminal number via the base station 30.

In the ISDN network, two communications can simultaneously be performed over one subscriber's line as mentioned previously; for example, even if ten sub-addresses are assigned to different mobile communication terminals for one subscriber's number, there is no problem, if three or more of the ten mobile communication terminals do not often communicate at the same time. Moreover, since the assignment of the sub-address to the mobile communication terminal which has left the coverage of the indoor communication system 70 is cancelled, the sub-address can efficiently be used.

In the case of performing communication by packet switching in the ISDN network, a terminating call to the mobile communication terminal 10 in the coverage of the indoor communication system 70, for example, is connected from the mobile communication switching center 40 to the public ISDN network on the basis of information read out of the location register 50 as referred to previously. In this case, the mobile communication switching center 40 generates a packet having a data part formed by a call control signal including the sub-address referred to in the location register 50 and an address part formed by the subscriber's number of the indoor communication system control device 20, and sends it to the indoor communication system control device 20 via the public ISDN network 100. The packet is taken apart by the indoor communication system control device 20, then the sub-address is used to read out the number of the called mobile communication terminal from the storage part 22, and a call is made for the mobile communication terminal as described previously. When the call is connected, the mobile communication switching center 40 generates a packet having its data part formed by a speech or facsimile signal to the mobile communication terminal 10 is generated as is the case with the above-said call control signal, the packet being sent to the indoor communication system control device 20. In the indoor communication system control device 20, the packet is taken apart, then the sub-address is read out, and a data signal is set to a mobile communication terminal of the terminal number corresponding to the read-out sub-address.

The processing for originating a call from the mobile communication terminal 10 in the coverage of the indoor communication system 70 is exactly the same as the processing depicted in Fig. 7. The cancellation of the sub-address assigned to the mobile communication terminal 10 is effected by the same processing as shown in Figs. 9 and 10. That is, the mobile communication terminal 10, which has moved into the coverage of the indoor communication system 70, makes a location registration request to the indoor communication system control device 20 at regular time intervals set by the timer 92, and the indoor communication system control device 20 responds to the location registration request to reset the timer 91, and when the timer 91 times out because no location registration request is received, the control device cancels the sub-address assigned to the mobile communication terminal and makes an incoming call forwarding de-registration request.

Moreover, the sub-address assignment is not limited specifically to the case of connecting an incoming call to the mobile communication terminal in the coverage of the second communication system by the incoming call forwarding registration; it is also possible to employ a system configuration in which, as is the case with the processing depicted in Fig. 4, the sub-address is assigned to the mobile communication terminal 10 having entered the coverage of the second communication system 70, a location registration request added with the terminal number, the sub-address and the subscriber's number is sent to the mobile communication switching center 40, and the subscriber's number and the sub-address are stored in the location register 50 as visited zone area information of the mobile communication terminal. The cancellation of the sub-address in this case is carried out in the same manner as shown in Fig. 5. That is, when the location registration of the mobile communication terminal 10 is changed in the location register 50, the location register 50 sends a location registration erase request to the indoor communication system control device 20 via the mobile communication switching center 40, and upon receiving the location registration erase request, the indoor communication system control device 20 cancels the sub-address assignment to the mobile communication terminal. In this way, the sub-address assignment can be cancelled by the same method for cancelling the assignment of the destination address; hence, the cancellation of the both will be referred to simply as an address cancellation.

In the above, a plurality of sub-addresses are assigned to different mobile communication terminals for one subscriber's address, but if there are a plurality of subscribers' numbers, a plurality of sub-addresses can also be assigned to mobile communication terminals for each subscriber's number. This will permit simultaneous communication of three or more mobile communication terminals via the indoor communication system 70. In this instance, the correspondence between the sub-address and the mobile communication terminal number is prestored for each subscriber's number in the storage part 22 as depicted in Fig. 16.

Upon receiving a location registration request signal from the mobile communication terminal 10, the indoor communication system control device 20 assigns the destination address or sub-address as described previously; when there is no destination address or sub-address to assign, it is also possible to employ a method which sends a mobile location confirmation request signal to every mobile communication terminal 10, cancels the assignment of the destination address or sub-address to the mobile communication terminal having not answered the request signal, and assigns such a destination address or sub-address to the mobile communication terminal which has made the location registration request.

While the present invention has been described as being applied to the case where the mobile communication terminal is in the coverage of the indoor communication system, the invention is also applicable to the case where the mobile communication terminal 10 is in the service area of a cordless telephone as shown in Fig. 1B, in which case the base station 8 performs the function of the indoor communication system control device 20 in Fig. 2. The present invention is applied to the case where the second communication system belongs to a public mobile communication network as well as to the case where it belongs to the public fixed communication network.

In general, a user manipulates his terminal to set and cancel an incoming call forwarding operation, but incoming call forwarding destination change means 26, which automatically performs the same processing as that for setting and cancelling the incoming call forwarding operation, may also be provided in the indoor communication system control device 20 as depicted in Fig. 2. When the mobile communication terminal 10 enters or leaves the coverage of the second communication system 70, the communication system control device 20 starts the incoming call forwarding destination change means to automatically register the setup and cancellation of the incoming call forwarding destination address in the location register 50.

In the above, the cancellation of the destination address or sub-address of the mobile communication terminal in the second communication system through the use of a timer can be applied not only to the case of registering the call interminating address or sub-address as an incoming call forwarding destination address in the location register but also to the case of registering it in the location register for the registration of the mobile location as shown in Fig. 4.

As described above, according to the present invention, the same mobile communication terminal can be used in the mobile communication network as well as in the second communication system; moreover, the same number can be used to originate and receive calls, regardless of in which network the mobile communication terminal is staying. Furthermore, when the mobile communication terminal is used in the coverage of the second communication system, communication can be effected by weak radio waves; hence, the battery used wears long.

Even a mobile communication terminal which is not pre-registered in the second communication system can be used in the second communication system, and since the destination address or sub-address is assigned to the mobile communication terminal only when it is in the coverage of the second communication system, the destination address or sub-address can efficiently be utilized.

A closed communication in the second communication system by the use of the mobile communication terminal can be achieved at low cost through the use of only the line of the second communication system. Moreover, by connecting the second communication system to a fixed communication network, call can be originated at the fee of fixed communication, permitting low-cost communication.

## Claims

1. A method of sharing a mobile communication terminal (10) between a mobile communication network (1) and a communication system (70) connected to said mobile communication network (1) directly or via another communication network (2); the method comprising:
a step wherein said mobile communication network (1) connects an incoming call to a mobile communication terminal (10) having a terminal number by referring to location registered area information corresponding to the terminal number of said mobile communication terminal (10) in a location register (50) provided in the mobile communication network (1);
a step wherein said communication system (70) connects a subscriber's line of the communication network (1, 2) connected directly to said communication system (70) and said mobile communication terminal (10) by radio via a communication system control device (20);
a step wherein when said communication system (70) receives from said mobile communication terminal (10) a request for registration that it belongs to said communication system (70), assigns a destination address to said mobile communication terminal (10), and sends the terminal number of said mobile communication terminal (10) and said destination address assigned thereto to said mobile communication network (1); and
a step wherein said mobile communication network (1) registers said destination address in correspondence with the terminal number of said mobile communication terminal (10) in said location register (50);
and being **characterized by**
a step wherein in response to each request for registration from said mobile communication terminal (10) said communication system (70) informs said mobile terminal (10) of the acknowledgement of its registration request and sets a first timer (91);
a step wherein when an incoming call to said mobile communication terminal (10) occurs, said mobile communication network (1) connects said incoming call to said mobile communication terminal (10) via said communication system (70) on the basis of said destination address of said mobile communication terminal (10) in said location register (50); and
a step wherein when said first timer (91) times out, said communication system (70) cancels the assignment of said destination address to said mobile communication terminal (10).

2. The method of claim 1, **characterized by:**
a step wherein upon being informed of the acknowledgement, said mobile communication terminal (10) sets a second timer (92) for a time shorter than that set by said first timer (91); and
a step wherein when said second timer (92) times out, said mobile communication terminal (10) sends again said registration request to said communication system (70).

3. The method of claim 1, **characterized by:**
a step wherein when said communication system (70) acknowledges a request from said mobile communication terminal (10) to register that it belongs to said communication system (70), said communication system (70) sets a second timer (93) and informs said mobile communication terminal (10) of the acknowledgement of said registration request;
a step wherein when said first timer (91) times out, said communication system (70) makes a mobile location confirmation request to said mobile communication terminal (10); and
a step wherein when no answer to said mobile location confirmation request is received from said mobile communication terminal (10) before said second timer (93) times out, said communication system (70) cancels the assignment of said destination address to said mobile communication terminal (10).

4. The method of any one of claims 1, 2 and 3, **characterized by:**
a step wherein when said mobile communication terminal (10) is used in the coverage of said communication system (70), said communication system (70) assigns to said mobile communication terminal (10) a destination address in said communication network (1, 2) connected directly to said communication system (70), and sends the terminal number of said mobile communication terminal (10) and said destination address assigned thereto to said mobile communication network (1);
a step wherein said mobile communication network (1) registers said destination address sent thereto, as said location registered area information, in correspondence with the terminal number of said mobile communication terminal (10) in said location register (50); and
a step wherein when an incoming call to said mobile communication terminal (10) occurs, said communication system (70) connects therethrough said incoming call to said mobile communication terminal (10) on the basis of said destination address registered as said location registered area information of said mobile communication terminal (10).

5. The method of any one of claims 1, 2 and 3, **characterized by:**
a step wherein when said mobile communication terminal (10) is used in the coverage of said communication system (70), said communication system (70) assigns a destination address to said mobile communication terminal (10) and sends the terminal number of said mobile communication terminal(10) and said destination address to said mobile communication network (1);
a step wherein said mobile communication network (1) registers said destination address sent thereto, as an incoming call forwarding destination address, in correspondence with the terminal number of said mobile communication terminal (10) in said location register (50); and
a step wherein when connection of an incoming call cannot be made by referring to said location registered area information, said mobile communication network (1) connects said incoming call to said mobile communication terminal (10) via said communication system (70) on the basis of said incoming call forwarding destination address of said mobile communication terminal (10) in said location register (50).

6. The method of any one of claims 1, 2 and 3, **characterized in that** said communication network to which said communication system (70) is connected forms a digital communication network of a terminal numbering system composed of a subscriber's terminal number and a sub-address; and further **characterized by**:
a step wherein when said mobile communication terminal (10) is used in the coverage of said communication system (70), said communication system (70) assigns, as said destination address, a sub-address to said mobile communication terminal (10) and sends the terminal number of said mobile communication terminal(10) and said sub-address assigned thereto to said mobile communication network (1);
a step wherein said mobile communication network (1) registers said sub-address sent thereto, as location registered area information, in correspondence with the terminal number of said mobile communication terminal (10) in said location register (50); and
a step wherein when said mobile communication network (1) cannot make connection of an incoming call to said mobile communication terminal (10) by referring to said location registered area information, connects said incoming call via said communication system (70) on the basis of said sub-address registered as said destination address of said mobile communication terminal (10) in said location register (50).

7. The method of claim 1, **characterized in that** said communication network (1, 2) to which said communication system (70) is directly connected forms a digital communication network of a terminal numbering system composed of a subscriber's terminal number and a sub-address; and further **characterized by**:
a step wherein when said mobile communication network (1) cannot make connection of said incoming call to a mobile communication terminal (10) by referring to said location registered area information, performs an incoming call forwarding connection by referring to an incoming call forwarding destination address of said mobile communication terminal (10) in said location register (50);
a step wherein when said mobile communication terminal (10) is used in the coverage of said communication system (70), said communication system (70) assigns a sub-address to said mobile communication terminal (10) and sends the terminal number of said mobile communication terminal (10) and said sub-address assigned thereto to said mobile communication network (1);
a step wherein said mobile communication network (1) registers said sub-address sent thereto, as an incoming call forwarding destination address in correspondence with said terminal number of said mobile communication terminal (10) in said location register (50); and
a step wherein when connection cannot be made by referring to said location registered area information, said mobile communication network (1) connects said incoming call to said mobile communication terminal (10) via said communication system (70) on the basis of said sub-address registered as said incoming call forwarding destination address of said mobile communication terminal (10) in said location register (50).

8. The method of any one of claims 1 to 7, **characterized by** a step wherein when the registration in said location register (50) is changed, said mobile communication network (1) makes a request to said communication system (70) for cancelling the assignment of said address to the mobile communication terminal (10) corresponding to said changed registration, and said communication system (70) responds to the request to cancel the assignment of said address to said mobile communication terminal (10).

9. A communication system control device employed in a communication system (70) connected to a mobile communication network (1) directly or via another communication network (2) for controlling connection between a mobile communication terminal (10) and said mobile communication network (1), said mobile communication terminal (10) having a terminal number and being allowed to be used in the coverage of said communication system (70) as well as said mobile communication network (1); said communication system control device comprising:
destination address assigning means (21) which is adapted to assign a destination address to said mobile communication terminal (10) at the start of its use in the coverage of said communication system (70);
storage means (23) which is adapted to store the correspondence between said assigned destination address and the terminal number of said mobile communication terminal (10) in a storage part (22); and
destination address reporting means (24) which is adapted to report said assigned destination address and the terminal number of said mobile communication terminal (10) to said mobile communication network (1);
**characterized by**:
means (20) which is adapted, when accepting a request from said mobile communication terminal (10) to register that it enters the coverage of said communication system (70), to report the acknowledgement of said request to said mobile communication terminal (10);
a timer (91) which is set upon each reporting of said acknowledgement; and
means (25) which is adapted to cancel the assignment of said destination address to said mobile communication terminal (10) when said timer (91) times out.

10. The device of claim 9, **characterized in that:**
the communication network (1, 2) to which said communication system (70) is directly connected forms a digital communication network of a terminal numbering system composed of a subscriber's terminal number and a sub-address, and said communication system (70) is connected via a subscriber's line to said communication network to which said communication system (70) is directly connected and to a mobile communication terminal (10) by radio for communication between them; and
said destination address assigning means (21) is adapted to assign, as said destination address, a sub-address to said mobile communication terminal (10);
said destination address reporting means (24) is adapted to report said assigned sub-address, its subscriber's terminal number and the terminal number of said mobile communication terminal (10) to said mobile communication network (1); and
means (20) is provided which is adapted to read out from said storage part (22) said mobile communication terminal number for calling said mobile communication terminal (10) on the basis of the sub-address of said incoming call when an incoming call to said communication system (70) from said mobile communication network (1) occurs.

11. The device of claim 9 or 10, **characterized by:**
incoming call forwarding destination change means (26) which is adapted to register an incoming call forwarding destination address or changing incoming call forwarding destination address in accordance with a user's manipulation; and
means (20) which is adapted to initiate said incoming call forwarding destination change means (26) to perform registration of an incoming call forwarding destination address when said mobile communication terminal (10) enters the coverage of said communication system (70).

12. The device of claim 9, **characterized by** further comprising: mobile location confirmation means (20) which is adapted to confirm that said mobile communication terminal (10) is in the coverage of said communication system (70) when said timer times (91) out, wherein said means (25) for cancelling the assignment of said destination address is adapted to cancel the assignment of said destination address when no answer to said confirmation is received from said mobile communication terminal (10).

## Patentansprüche

1. Verfahren zur gemeinsamen Nutzung eines Mobilkommunikationsendgerätes (10) durch ein Mobilkommunikationsnetzwerk (1) und ein mit dem Mobilkommunikationsnetzwerk (1) direkt oder über ein anderes Kommunikationsnetzwerk (2) verbundenes Kommunikationssystem (70); wobei das Verfahren umfasst:
einen Schritt, bei dem das Mobilkommunikationsnetzwerk (1) einen ankommenden Ruf mit einem eine Endgerätnummer habenden Mobilkommunikationsendgerät (10) durch Zugriff auf Ortsregistrierungsgebietinformation, die der Endgerätnummer des Mobilkommunikationsendgerätes (10) in einem in dem Mobilkommunikationsnetzwerk (1) vorgesehenen Ortsregister (5) entspricht, verbindet;
einen Schritt, bei dem das Kommunikationssystem (70) eine Teilnehmerleitung des direkt mit dem Kommunikationssystem (70) verbundenen Kommunikationsnetzwerks (1, 2) und das Kommunikationsendgerät (10) per Funk über eine Kommunikationssystem-Steuervorrichtung (20) verbindet;
einen Schritt, bei dem das Kommunikationssystem (70) von dem Mobilkommunikationsendgerät (10) eine Anforderung zur Registrierung, dass es zu dem Kommünikationssystem (70) gehört, empfängt, dem Mobilkommunikationsendgerät (10) eine Zieladresse zuweist und die Endgerätnummer des Mobilkommunikationsendgerätes (10) und die diesem zugewiesene Zieladresse an das Mobilkommunikationsnetzwerk (1) sendet; und
einen Schritt, bei dem das Mobilkommunikationsnetzwerk (1) die Zieladresse in Entsprechung zur Endgerätnummer des Mobilkommunikationsendgerätes (10) in dem Ortsregister (50) registriert;
**gekennzeichnet durch**
einen Schritt, bei dem in Reaktion auf jede Anforderung zur Registrierung von dem Mobilkommunikationsendgerät (10) das Kommunikationssystem (70) das mobile Endgerät (10) über die Bestätigung von dessen Registrierungsanforderung informiert und einen ersten Zeitgeber (91) setzt;
einen Schritt, bei dem, wenn ein ankommender Ruf an das Mobilkommunikationsendgerät (10) auftritt, das Mobilkommunikationsnetzwerk (1) den ankommenden Ruf mit dem Mobilkommunikationsendgerät (10) über das Kommunikationssystem (70) auf der Grundlage der Zieladresse des Mobilkommunikationsendgerätes (10) in dem Ortsregister (50) verbindet; und
einen Schritt, bei dem, wenn der erste Zeitgeber (91) abläuft, das Kommunikationssystem (70) die Zuweisung der Zieladresse zu dem Mobilkommunikationsendgerät (10) aufhebt.

2. Verfahren nach Anspruch 1, **gekennzeichnet durch** einen Schritt, bei dem das Mobilkommunikationsendgerät (10), wenn es über die Bestätigung informiert wird, einen zweiten Zeitgeber (92) für eine kürzere Zeit als die von dem ersten Zeitgeber (91) gesetzte Zeit setzt; und
einen Schritt, bei dem, wenn der zweite Zeitgeber (92) abläuft, das Mobilkommunikationsendgerät (10) erneut die Registrierungsanforderung an das Kommunikationssystem (70) sendet.

3. Verfahren nach Anspruch 1, **gekennzeichnet durch** einen Schritt, bei dem, wenn das Kommunikationssystem (70) eine Anforderung von dem Mobilkommunikationsendgerät (10), zu registrieren, dass es zu dem Kommunikationssystem (70) gehört, bestätigt, das Kommunikationssystem (70) einen zweiten Zeitgeber (93) setzt und das Mobilkommunikationsendgerät (10) über die Bestätigung der Registrierungsanforderung informiert;
einen Schritt, bei dem, wenn der erste Zeitgeber (91) abläuft, das Kommunikationssystem (70) eine Mobil-Ortsbestätigungsanforderung an das Mobilkommunikationsendgerät (10) richtet; und
einen Schritt, bei dem, wenn keine Antwort auf die Mobil-Ortsbestätigungsanforderung von dem Mobilkommunikationsendgerät (10) empfangen wird, bevor der zweite Zeitgeber (93) abläuft, das Kommunikationssystem (70) die Zuweisung der Zieladresse zu dem Mobilkommunikationsendgerät (10) aufhebt.

4. Verfahren nach einem der Ansprüche 1, 2 und 3, **gekennzeichnet durch**
einen Schritt, bei dem, wenn das Mobilkommunikationsendgerät (10) im Überdeckungsbereich des Kommunikationssystems (70) verwendet wird, das Kommunikationssystem (70) dem Mobilkommunikationsendgerät (10) eine Zieladresse in dem direkt mit dem Kommunikationssystem (70) verbundenen Kommunikationsnetzwerk (1, 2) zuweist und die Endgerätnummer des Mobilkommunikationsendgerätes (10) und die diesem zugewiesene Zieladresse an das Mobilkommunikationsnetzwerk (1) sendet;
einen Schritt, bei dem das Mobilkommunikationsnetzwerk (1) die an es gesendete Zieladresse als die Ortsregistrierungsgebietsinformation in Entsprechung zu der Endgerätnummer des Mobilkommunikationsendgerätes (10) in dem Ortsregister (50) registriert; und
einen Schritt, bei dem, wenn ein ankommender Ruf an das Mobilkommunikationsendgerät (10) auftritt, das Kommunikationssystem (70) den ankommenden Ruf mit dem Mobilkommunikationsendgerät (10) auf der Grundlage der als Ortsregistrierungsgebietsinformation des Mobilkommunikationsendgerätes (10) registrierten Zieladresse durchverbindet.

5. Verfahren nach einem der Ansprüche 1, 2 und 3, **gekennzeichnet durch:**
einen Schritt, bei dem, wenn das Mobilkommunikationsendgerät (10) im Überdeckungsbereich des Kommunikationssystems (70) verwendet wird, das Kommunikationssystem (70) dem Mobilkommunikationsendgerät (10) eine Zieladresse zuweist und die Endgerätnummer des Mobilkommunikationsendgerätes (10) und die Zieladresse an das Mobilkommunikationsnetzwerk (1) sendet;
einen Schritt, bei dem das Mobilkommunikationsnetzwerk (1) die an es gesendete Zieladresse als eine Zieladresse zur Weiterleitung eines ankommenden Rufes in Entsprechung zu der Endgerätnummer des Mobilkommunikationsendgerätes (10) in dem Ortsregister (50) registriert; und
einen Schritt, bei dem, wenn eine Verbindung eines ankommenden Rufes **durch** Rückgriff auf die Ortsregistrierungsgebietsinformation nicht erfolgen kann, das Mobilkommunikationsnetzwerk (1) den ankommenden Ruf mit dem Mobilkommunikationsendgerät (10) über das Kommunikationssystem (70) auf der Grundlage der Zieladresse zur Weiterleitung eines ankommenden Rufes des Mobilkommunikationsendgerätes (10) in dem Ortsregister (50) verbindet.

6. Verfahren nach einem der Ansprüche 1, 2 und 3, **dadurch gekennzeichnet, dass** das Kommunikationsnetzwerk, an das das Kommunikationssystem (70) angeschlossen ist, ein digitales Kommunikationsnetzwerk mit einem aus einer Teilnehmerendgerätnummer und einer Subadresse gebildeten Endgerätnumerierungssystem ist, ferner **gekennzeichnet durch**:
einen Schritt, bei dem, wenn das Mobilkommunikationsendgerät (10) im Überdeckungsbereich des Kommunikationssystems (70) verwendet wird, das Kommunikationssystem (70) als die Zieladresse dem Mobilkommunikationsendgerät (10) eine Subadresse zuweist und die Endgerätnummer des Mobilkommunikationsendgerätes (10) und die ihm zugewiesene Subadresse an das Mobilkommunikationsnetzwerk (1) sendet;
einen Schritt, bei dem das Mobilkommunikationsnetzwerk (1) die an es gesendete Subadresse als Ortsregistrierungsgebietsinformation in Entsprechung zu der Endgerätnummer des Mobilkommunikationsendgerätes (10) in dem Ortsregister (50) registriert; und
einen Schritt, bei dem das Mobilkommunikationsnetzwerk (1), wenn es eine Verbindung eines ankommenden Rufes mit dem Mobilkommunikationsendgerät (10) **durch** Rückgriff auf die Ortsregistrierungsgebietsinformation nicht herstellen kann, den ankommenden Ruf über das Kommunikationssystem (70) auf der Grundlage der als die Zieladresse des Mobükommunikationsendgerätes (10) in dem Ortsregister (50) registrierten Subadresse verbindet.

7. Verfahren nach Anspruch 1, **dadurch gekennzeichnet, dass** das Kommunikationsnetzwerk (1, 2), an welches das Kommunikationssystem (70) direkt angeschlossen ist, ein digitales Kommunikationsnetzwerk mit einem aus einer Teilnehmerendgerätnummer und einer Subadresse gebildeten Endgerätnumerierungssystem ist, ferner **gekennzeichnet durch**:
einen Schritt, bei dem das Mobilkommunikationsnetzwerk (1), wenn es eine Verbindung eines ankommenden Rufes mit dem Mobilkommunikationsendgerät (10) **durch** Rückgriff auf die Ortsregistrierungsgebietsinformation nicht durchführen kann, eine Verbindung zur Weiterleitung eines ankommenden Rufes durchführt **durch** Rückgriff auf eine Zieladresse für die Weiterleitung eines ankommenden Rufes des Mobilkommunikationsendgerätes (10) in dem Ortsregister (50);
einen Schritt, bei dem, wenn das Mobilkommunikationsendgerät (10) im Überdeckungsbereich des Kommunikationssystems (70) verwendet wird, das Kommunikationssystem (70) dem Mobilkommunikationsendgerät (10) eine Subadresse zuweist und die Endgerätnummer des Mobilkommunikationsendgerätes (10) und die ihm zugewiesene Subadresse an das Mobilkommunikationsnetzwerk (1) sendet;
einen Schritt, bei dem das Mobilkommunikationsnetzwerk (1) die an es gesendete Subadresse als eine Zieladresse für die Weiterleitung eines ankommenden Rufes in Entsprechung mit der Endgerätnummer des Mobilkommunikationsendgerätes (10) in dem Ortsregister (50) registriert; und
einen Schritt, bei dem, wenn eine Verbindung **durch** Zugriff auf die Ortsregistrierungsgebietsinformation nicht hergestellt werden kann, das Mobilkommunikationsnetzwerk (1) den ankommenden Ruf mit dem Mobilkommunikationsendgerät (10) über das Kommunikationssystem (70) auf der Grundlage der als Zieladresse zur Weiterleitung eines ankommenden Rufes registrierten Subadresse des Mobilkommunikationsendgerätes (10) in dem Ortsregister (50) verbindet.

8. Verfahren nach einem der Ansprüche 1 bis 7, **gekennzeichnet durch** einen Schritt, bei dem, wenn die Registrierung in dem Ortsregister (50) geändert wird, das Mobilkommunikationsnetzwerk (1) eine Anforderung an das Kommunikationssystem (70) zum Aufheben der Zuweisung der Adresse des Mobilkommunikationsendgerätes (10), das der geänderten Registrierung entspricht, macht und das Kommunikationssystem (70) auf die Anforderung reagiert **durch** Aufheben der Zuweisung der Adresse an das Mobilkommunikationsendgerät (10).

9. Kommunikationssystem-Steuervorrichtung, verwendet in einem direkt oder über ein anderes Kommunikationsnetzwerk (2) mit einem Mobilkommunikationsnetzwerk (1) verbundenen Kommunikationssystem (70) zum Steuern der Verbindung zwischen einem Mobilkommunikationsendgerät (10) und dem Mobilkommunikationsnetzwerk (1), wobei das Mobilkommunikationsendgerät (10) eine Endgerätnummer hat und im Überdeckungsbereich des Kommunikationssystems (70) sowie in dem Mobilkommunikationsnetzwerk (1) benutzt werden darf, wobei die Kommunikationssystem-Steuervorrichtung umfasst:
ein Zieladressenzuweisungsmittel (21), welches eingerichtet ist, dem Mobilkommunikationsendgerät (10) zu Beginn seiner Verwendung im Überdeckungsbereich des Kommunikationssystems (70) eine Zieladresse zuzuweisen;
ein Speichermittel (23), das eingerichtet ist, die Entsprechung zwischen der zugewiesenen Zieladresse und der Endgerätnummer des Mobilkommunikationsendgerätes (10) in einem Speicherteil (22) zu speichern; und
ein Zieladressenberichtmittel (24), das eingerichtet ist, die zugewiesene Zieladresse und die Endgerätnummer des Mobilkommunikationsendgerätes (10) an das Mobilkommunikationsnetzwerk (1) zu berichten;
**gekennzeichnet durch**:
ein Mittel (20), das eingerichtet ist, bei Annahme einer Anforderung von dem Mobilkommunikationsendgerät (10), zu registrieren, dass es in den Überdeckungsbereich des Kommunikationssystems (70) eintritt, die Bestätigung dieser Anforderung an das Mobilkommunikationsendgerät (10) zu berichten;
einen Zeitgeber (91), der bei jedem Berichten der Bestätigung gesetzt wird; und
ein Mittel (25), das eingerichtet ist, die Zuweisung der Zieladresse zu dem Mobilkommunikationsendgerät (10) aufzuheben, wenn der Zeitgeber (91) abläuft.

10. Vorrichtung nach Anspruch 9, **dadurch gekennzeichnet, dass:**
das Kommunikationsnetzwerk (1, 2), mit dem das Kommunikationssystem (70) direkt verbunden ist, ein digitales Kommunikationsnetzwerk mit einem aus einer Teilnehmerendgerätnummer und einer Subadresse gebildeten Endgerätnumerierungssystem bildet und dass das Kommunikationssystem (70) über eine Teilnehmerleitung mit dem Kommunikationsnetzwerk, mit dem das Kommunikationssystem (70) direkt verbunden ist, und über Funk mit einem Mobilkommunikationsendgerät (10) zur Kommunikation zwischen ihnen verbunden ist; und
das Zieladressenzuweisungsmittel (21) eingerichtet ist, als die Zieladresse eine Subadresse dem Mobilkommunikationsendgerät (10) zuzuweisen;
das Zieladressenberichtmittel (24) eingerichtet ist, die zugewiesene Subadresse, dessen Teilnehmerendgerätnummer und die Endgerätnummer des Mobilkommunikationsendgerätes (10) an das Mobilkommunikationsnetzwerk (1) zu berichten; und
ein Mittel (20) vorgesehen ist, das eingerichtet ist, aus dem Speicherteil (22) die Mobilkommunikationsendgerätnummer zum Rufen des Mobilkommunikationsendgerätes (10) auf der Grundlage der Subadresse des ankommenden Rufes zu lesen, wenn ein ankommender Ruf an das Kommunikationssystem (70) von dem Mobilkommunikationsnetzwerk (1) auftritt.

11. Vorrichtung nach Anspruch 9 oder 10, **gekennzeichnet durch:**
ein Zieländerungsmittel für die Weiterleitung eines ankommenden Rufes, welches eingerichtet ist, entsprechend einer Benutzermanipulation eine Zieladresse für die Weiterleitung eines ankommenden Rufs zu registrieren oder eine Zieladresse für die Weiterleitung eines ankommenden Rufes zu ändern; und
ein Mittel (20), das eingerichtet ist, das Zieländerungsmittel für die Weiterleitung eines ankommenden Rufes zu initiieren, um eine Registrierung einer Zieladresse für die Weiterleitung eines ankommenden Rufes durchzuführen, wenn das Mobilkommunikationsendgerät (10) in den Überdeckungsbereich des Kommunikationssystems (70) eintritt.

12. Vorrichtung nach Anspruch 9, ferner **gekennzeichnet durch:** ein Mobil-Ortsbestätigungsmittel (20), das eingerichtet ist, zu bestätigen, dass das Mobilkommunikationsendgerät (10) im Überdeckungsbereich des Kommunikationssystems (70) ist, wenn der Zeitgeber (91) abläuft, wobei das Mittel (25) zum Aufheben der Zuweisung der Zieladresse eingerichtet ist, die Zuweisung der Zieladresse aufzuheben, wenn keine Antwort auf die Bestätigung von dem Mobilkommunikationsendgerät (10) empfangen wird.

## Revendications

1. Procédé de partage d'un terminal (10) de communication mobile entre un réseau (1) de communication mobile et un système (70) de communication connecté audit réseau (1) de communication mobile directement ou par l'intermédiaire d'un autre réseau (2) de communication ; le procédé comprenant :
une étape dans laquelle ledit réseau (1) de communication mobile connecte un appel entrant à un terminal (10) de communication mobile ayant un numéro de terminal en se référant à de l'information enregistrée de zone de localisation correspondant au numéro de terminal dudit terminal (10) de communication mobile dans un registre (50) de localisation prévu dans le réseau (1) de communication mobile ;
une étape dans laquelle ledit système (70) de communication connecte une ligne d'un abonné du réseau (1, 2) de communication connectée directement audit système (70) de communication et ledit terminal (10) de communication mobile via un dispositif (20) de commande de système de communication ;
une étape dans laquelle, lorsque ledit système (70) de communication reçoit dudit terminal (10) de communication mobile une demande pour enregistrer qu'il appartient audit système (70) de communication, affecte une adresse de destination audit terminal (10) de communication mobile, et envoie le numéro de terminal dudit terminal (10) de communication mobile et ladite adresse de destination qui lui est affectée audit réseau (1) de communication mobile ; et
une étape dans laquelle ledit réseau (1) de communication mobile enregistre ladite adresse de destination en correspondance avec le numéro de terminal dudit terminal (10) de communication mobile dans ledit registre (50) de localisation ;
et étant **caractérisé :**
**par** une étape dans laquelle, en réponse à chaque demande d'enregistrement provenant dudit terminal (10) de communication mobile, ledit système (70) de communication informe ledit terminal mobile (10) de l'accusé de réception de sa demande d'enregistrement et règle un premier temporisateur (91) ;
par une étape dans laquelle, lorsqu'un appel entrant pour ledit terminal (10) de communication mobile apparaît, ledit réseau (1) de communication mobile connecte ledit appel entrant audit terminal (10) de communication mobile par l'intermédiaire dudit système (70) de communication sur la base de ladite adresse de destination dudit terminal (10) de communication mobile dans ledit registre (50) de localisation ; et
par une étape dans laquelle, lorsque le temps imparti s'est écoulé dans ledit premier temporisateur (91), ledit système (70) de communication annule l'affectation de ladite adresse de destination audit terminal (10) de communication mobile.

2. Procédé selon la revendication 1, **caractérisé :**
**par** une étape dans laquelle, lorsqu'il est informé de l'accusé de réception, ledit terminal (10) de communication mobile règle un second temporisateur (92) pour un temps plus court que celui réglé par le premier temporisateur (91) ; et
par une étape dans laquelle, lorsque le temps imparti s'est écoulé dans ledit second temporisateur (91), ledit terminal (10) de communication mobile envoie à nouveau ladite demande d'enregistrement audit système (70) de communication.

3. Procédé selon la revendication 1, **caractérisé :**
**par** une étape dans laquelle, lorsque ledit système (70) de communication accuse réception d'une demande provenant dudit terminal (10) de communication mobile pour enregistrer qu'il appartient audit système (70) de communication, ledit système (70) de communication règle un second temporisateur (93) et informe ledit terminal (10) de communication mobile de l'accusé de réception de ladite demande d'enregistrement ;
par une étape dans laquelle, lorsque le temps imparti s'est écoulé dans ledit premier temporisateur (91), ledit système (70) de communication fait une demande de confirmation de localisation de mobile audit terminal (10) de communication mobile ; et
par une étape dans laquelle, lorsqu'aucune réponse à ladite demande de confirmation de localisation de mobile n'est reçue dudit terminal (10) de communication mobile avant écoulement du temps imparti dans ledit second temporisateur (93), ledit système (70) de communication annule l'affectation de ladite adresse de destination audit terminal (10) de communication mobile.

4. Procédé selon l'une quelconque des revendications 1, 2 et 3, **caractérisé :**
**par** une étape dans laquelle, lorsque ledit terminal (10) de communication mobile est utilisé dans la couverture dudit système (70) de communication, ledit système (70) de communication affecte audit terminal (10) de communication mobile une adresse de destination dans ledit réseau (1, 2) de communication connecté directement audit système (70) de communication, et envoie le numéro de terminal dudit terminal (10) de communication mobile et ladite adresse de destination qui lui est affectée audit réseau (1) de communication mobile ;
par une étape dans laquelle ledit réseau (1) de communication mobile enregistre ladite adresse de destination qui lui est envoyée, en tant que ladite information enregistrée de zone de localisation, en correspondance avec le numéro de terminal dudit terminal (10) de communication mobile dans ledit registre (50) de localisation ; et
par une étape dans laquelle, lorsqu'un appel entrant pour ledit terminal (10) de communication mobile apparaît, ledit système (70) de communication connecte à travers lui ledit appel entrant audit terminal (10) de communication mobile sur la base de ladite adresse de destination enregistrée en tant que ladite information enregistrée de zone de localisation dudit terminal (10) de communication mobile.

5. Procédé selon l'une quelconque des revendications 1, 2 et 3, **caractérisé :**
**par** une étape dans laquelle, lorsque ledit terminal (10) de communication mobile est utilisé dans la couverture dudit système (70) de communication, ledit système (70) de communication affecte une adresse de destination audit terminal (10) de communication mobile et envoie le numéro de terminal dudit terminal (10) de communication mobile et ladite adresse de destination audit réseau (1) de communication mobile ;
par une étape dans laquelle ledit réseau (1) de communication mobile enregistre ladite adresse de destination qui lui est envoyée, en tant qu'adresse de destination d'acheminement d'appel entrant, en correspondance avec le numéro de terminal dudit terminal (10) de communication mobile dans ledit registre (50) de localisation ; et
par une étape dans laquelle, lorsque la connexion d'un appel entrant ne peut pas se faire en se référant à ladite information enregistrée de zone de localisation, ledit réseau (1) de communication mobile connecte ledit appel entrant audit terminal (10) de communication mobile par l'intermédiaire dudit système (70) de communication sur la base de ladite adresse de destination d'acheminement d'appel entrant dudit terminal (10) de communication mobile dans ledit registre (50) de localisation.

6. Procédé selon l'une quelconque des revendications 1, 2 et 3, **caractérisé en ce que** ledit réseau de communication auquel ledit système (70) de communication est connecté forme un réseau de communication numérique d'un système de numérotation de terminal composé du numéro de terminal d'un abonné et d'une sous-adresse ; et **caractérisé en outre :**
**par** une étape dans laquelle, lorsque ledit terminal (10) de communication mobile est utilisé dans la couverture dudit système (70) de communication, ledit système (70) de communication affecte, en tant que ladite adresse de destination, une sous-adresse audit terminal (10) de communication mobile et envoie le numéro de terminal dudit terminal (10) de communication mobile et ladite sous-adresse qui lui est affectée audit réseau (1) de communication mobile ;
par une étape dans laquelle ledit réseau (1) de communication mobile enregistre ladite sous-adresse qui lui est envoyée, en tant qu'information enregistrée de zone de localisation, en correspondance avec le numéro de terminal dudit terminal (10) de communication mobile dans ledit registre (50) de localisation ; et
par une étape dans laquelle, lorsque ledit réseau (1) de communication mobile ne peut pas faire la connexion d'un appel entrant audit terminal (10) de communication mobile en se référant à ladite information enregistrée de zone de localisation, connecte ledit appel entrant par l'intermédiaire dudit système (70) de communication sur la base de ladite sous-adresse enregistrée en tant que ladite adresse de destination dudit terminal (10) de communication mobile dans ledit registre (50) de localisation.

7. Procédé selon la revendication 1, **caractérisé en ce que** ledit réseau (1, 2) de communication auquel ledit système (70) de communication est connecté directement forme un réseau de communication numérique d'un système de numérotation de terminal composé du numéro de terminal d'un abonné et d'une sous-adresse ; et **caractérisé en outre :**
**par** une étape dans laquelle, lorsque ledit réseau (1) de communication mobile ne peut pas faire la connexion dudit appel entrant à un terminal (10) de communication mobile en se référant à ladite information enregistrée de zone de localisation, effectue une connexion d'acheminement d'appel entrant en se référant à une adresse de destination d'acheminement d'appel entrant dudit terminal (10) de communication mobile dans ledit registre (50) de localisation ;
par une étape dans laquelle, lorsque ledit terminal (10) de communication mobile est utilisé dans la couverture dudit système (70) de communication, ledit système (70) de communication affecte une sous-adresse audit terminal (10) de communication mobile et envoie le numéro de terminal dudit terminal (10) de communication mobile et ladite sous-adresse qui lui est affectée audit réseau (1) de communication mobile ;
par une étape dans laquelle ledit réseau (1) de communication mobile enregistre ladite sous-adresse qui lui est envoyée, en tant qu'adresse de destination d'acheminement d'appel entrant en correspondance avec ledit numéro de terminal dudit terminal (10) de communication mobile dans ledit registre (50) de localisation ; et
par une étape dans laquelle, lorsque la connexion ne peut pas se faire en se référant à ladite information enregistrée de zone de localisation, ledit réseau (1) de communication mobile connecte ledit appel entrant audit terminal (10) de communication mobile par l'intermédiaire dudit système (70) de communication sur la base de ladite sous-adresse enregistrée en tant que ladite adresse de destination d'acheminement d'appel entrant dudit terminal (10) de communication mobile dans ledit registre (50) de localisation.

8. Procédé selon l'une quelconque des revendications 1 à 7, **caractérisé par** une étape dans laquelle, lorsque l'enregistrement dans ledit registre (50) de localisation est changé, ledit réseau (1) de communication mobile fait une demande audit système (70) de communication pour annuler l'affectation de ladite adresse au terminal (10) de communication mobile correspondant audit enregistrement changé, et ledit système (70) de communication répond à la demande pour annuler l'affectation de ladite adresse audit terminal (10) de communication mobile.

9. Dispositif de commande de système de communication employé dans un système (70) de communication connecté à un réseau (1) de communication mobile directement ou par l'intermédiaire d'un autre réseau (2) de communication pour commander la connexion entre un terminal (10) de communication mobile et ledit réseau (1) de communication mobile, ledit terminal (10) de communication mobile ayant un numéro de terminal et étant autorisé à être utilisé dans la couverture dudit système (70) de communication de même que ledit réseau (1) de communication mobile ; ledit dispositif de commande de système de communication comprenant :
un moyen (21) d'affectation d'adresse de destination qui est apte à affecter une adresse de destination audit terminal (10) de communication mobile au début de son utilisation dans la couverture dudit système (70) de communication ;
un moyen (23) de mémorisation qui est apte à mémoriser, dans une partie mémoire (22), la correspondance entre ladite adresse de destination affectée et le numéro de terminal dudit terminal (10) de communication mobile ; et
un moyen (24) de compte rendu d'adresse de destination qui est apte à rendre compte, audit réseau (1) de communication mobile, de ladite adresse de destination affectée et du numéro de terminal dudit terminal (10) de communication mobile ;
**caractérisé :**
**par** un moyen (20) qui est apte, lors de l'acceptation d'une demande provenant dudit terminal (10) de communication mobile pour enregistrer qu'il est entré dans la couverture dudit système (70) de communication, à rendre compte de l'accusé de réception de ladite demande audit terminal (10) de communication mobile ;
par un temporisateur (91) qui est réglé à chaque compte rendu dudit accusé de réception ; et
par un moyen (25) qui est apte à annuler l'affectation de ladite adresse de destination audit terminal (10) de communication mobile lorsque le temps imparti par ledit temporisateur (91) s'est écoulé.

10. Dispositif selon la revendication 9, **caractérisé :**
**en ce que** le réseau (1, 2) de communication auquel ledit système (70) de communication est connecté directement forme un réseau de communication numérique d'un système de numérotation de terminal composé du numéro de terminal d'un abonné et d'une sous-adresse, et ledit système (70) de communication est connecté par l'intermédiaire de la ligne d'un abonné audit réseau de communication auquel ledit système (70) de communication est directement connecté et à un terminal (10) de communication mobile par radio pour communication entre eux ; et
**en ce que** ledit moyen (21) d'affectation d'adresse de destination est apte à affecter, en tant que ladite adresse de destination, une sous-adresse audit terminal (10) de communication mobile ;
**en ce que** ledit moyen (24) de compte rendu d'adresse de destination est apte à rendre compte, audit réseau (1) de communication mobile, de ladite sous-adresse affectée, de son numéro de terminal d'abonné et du numéro de terminal dudit terminal (10) de communication mobile ; et
**en ce qu'**il est prévu un moyen (20) qui est apte à lire dans ladite partie mémoire (22) ledit numéro de terminal de communication mobile pour appeler ledit terminal (10) de communication mobile sur la base de la sous-adresse dudit appel entrant lorsqu'il apparaît un appel entrant pour ledit système (70) de communication en provenance dudit réseau (1) de communication mobile.

11. Dispositif selon la revendication 9 ou 10, **caractérisé :**
**par** un moyen (26) de changement de destination d'acheminement d'appel entrant qui est apte à enregistrer une adresse de destination d'acheminement d'appel entrant ou un changement d'adresse de destination d'acheminement d'appel entrant en fonction d'une manipulation de l'utilisateur ; et
par un moyen (20) qui est apte à lancer ledit moyen (26) de changement de destination d'acheminement d'appel entrant pour effectuer l'enregistrement d'une adresse de destination d'acheminement d'appel entrant lorsque le terminal (10) de communication mobile entre dans la couverture dudit système (70) de communication.

12. Dispositif selon la revendication 9, **caractérisé en ce qu'**il comprend en outre : un moyen (20) de confirmation de localisation de mobile qui est apte à confirmer que ledit terminal (10) de communication mobile est dans la couverture dudit système (70) de communication lorsque le temps imparti par ledit temporisateur (91) s'est écoulé, dans lequel ledit moyen (25) destiné à annuler l'affectation de ladite adresse de destination est apte à annuler l'affectation de ladite adresse de destination lorsqu'aucune réponse à ladite confirmation n'est reçue dudit terminal (10) de communication mobile.
